(19) Europäisches Patentamt
European Patent Office
Office européen des brevets

(11) EP 2 053 721 A2

(12) EUROPEAN PATENT APPLICATION

(43) Date of publication:
29.04.2009 Bulletin 2009/18

(51) Int Cl.:
H02K 1/14 (2006.01)

(21) Application number: 08014860.4

(22) Date of filing: 21.08.2008

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(30) Priority: 23.10.2007 JP 2007274579
25.04.2008 JP 2008114764

(71) Applicant: Hitachi Ltd.
Chiyoda-ku
Tokyo 100-8280 (JP)

(72) Inventors:
• Miyata, Kenji
Tokyo (JP)

• Ishikawa, Yoshihisa
Tokyo (JP)
• Ito, Motoya
Tokyo (JP)
• Enomoto, Yuji
Tokyo (JP)
• Koyama, Takayuki
Tokyo (JP)

(74) Representative: Beetz & Partner
Patentanwälte
Steinsdorfstrasse 10
80538 München (DE)

(54) **Rotating machine**

(57) A rotating electrical machine includes: a stator that includes two stator stages each constituted with a plurality of claw poles extending toward opposite sides along an axial direction at alternate positions and a ring-shaped core back that forms a magnetic path between the claw poles, the two stator stages being stacked over along the axial direction; a stator winding formed by winding a coil in a ring shape and disposed in a space enclosed by the claw poles and the core back at each of the stator stages; and a rotor rotatably disposed at a position facing the claw poles of the stator, and: stator windings corresponding to a plurality of phases are disposed together at least at one of the two stator stages.

FIG.1

EP 2 053 721 A2

**Description**

The disclosures of the following priority application are herein incorporated by reference: Japanese Patent Application No. 2007-274579 filed October 23, 2007; and Japanese Patent Application No. 2008-114764 filed April 25 2008.

The present invention relates to a rotating electrical machine such as a motor or a dynamo electric generator used in a wide range of applications including electromechanical power applications, industrial applications, home appliance applications and automotive applications.

Rotating electrical machines are various types of motors and generators such as induction motors, permanent magnet synchronous motors, DC commutator motors and various types of generators, are utilized in a wide range of applications. Such a rotating electrical machine may be used as a motor by adopting a principle whereby a stator or a rotor is constituted with a winding and a core and a rotational force is obtained via an electromagnet formed at the core as a current is supplied to the winding.

A claw pole stator in a rotating electrical machine in the related art normally assumes a structure that includes claw pole structure stages each disposed in correspondence to a specific coil phase with the claw poles corresponding to different coil phases physically offset relative to one another along the circumferential direction so as to shift their phases relative to one another. However, there is a limit to the size of the area over which such a stator is allowed to face opposite the poles at the rotor.

In addition, while a multiphase motor assuming more than three phases has an advantage over a three-phase motor in that the multiphase motor allows for smoother and more precise positioning, the multiphase motor requires a coil power source for each phase.

According to the 1st aspect of the present invention, a rotating electrical machine comprises: a stator that includes two stator stages each constituted with a plurality of claw poles extending toward opposite sides along an axial direction at alternate positions and a ring-shaped core back that forms a magnetic path between the claw poles, the two stator stages being stacked over along the axial direction; a stator winding formed by winding a coil in a ring shape and disposed in a space enclosed by the claw poles and the core back at each of the stator stages; and a rotor rotatably disposed at a position facing the claw poles of the stator, and: stator windings corresponding to a plurality of phases are disposed together at least at one of the two stator stages.

According to the 2nd aspect of the present invention, in the rotating electrical machine according to the 1st aspect, it is preferred that the two stator stages at the stator are disposed with an offset along a circumferential direction by an extent equivalent to an electrical angle Ø assuming a value which is approximately a semi-integral multiple of π.

According to the 3rd aspect of the present invention, in the rotating electrical machine according to the 2nd aspect, it is preferred that the angle Ø assumed as the offset at the stator is a 90° electrical angle.

According to the 4th aspect of the present invention, in the rotating electrical machine according to the 1st aspect, it is preferred that: the stator includes stator windings corresponding to a plurality of phases; and stator windings corresponding to all the phases are wound at one of the two stator stages and a stator winding corresponding to a certain phase excluding a specific phase is wound at the other stator stage.

According to the 5th aspect of the present invention, in the rotating electrical machine according to the 4th aspect, it is preferred that the stator windings corresponding to the plurality of phases are each wound with a number of turns so that composite magnetic fluxes achieved via the two stator stages achieve magnetic flux linkage waveforms corresponding to the plurality of phases.

According to the 6th aspect of the present invention, in the rotating electrical machine according to the 1st aspect, it is preferred that: the stator includes stator windings corresponding to three phases; and stator windings corresponding to all three phases are wound at one of the two stator stages and stator windings corresponding to two phases excluding a specific phase are wound at the other stator stage.

According to the 7th aspect of the present invention, in the rotating electrical machine according to the 1st aspect, it is preferred that the rotor and the stator have equal numbers of poles.

According to the 8th aspect of the present invention, in the rotating electrical machine according to the 1st aspect, it is preferred that the rotor and the stator both have 20 poles.

According to the 9th aspect of the present invention, in the rotating electrical machine according to the 1st aspect, it is preferred that: the core back is formed by laminating a plurality of ring-shaped metal sheets one on top of another along a radial direction relative to a rotary shaft and is disposed so as to cover an outer circumference of the stator winding; and the claw poles are set alternately at one of side surfaces of the core back present along the axial direction and at an opposite side surface so as to surround the stator winding together with the core back, are formed by laminating metal sheets along a circumferential direction relative to the rotary shaft of the rotor and are connected to the core back so that a magnetic path between adjacent poles is formed via the core back.

According to the 10th aspect of the present invention, in the rotating electrical machine according to the 1st aspect, it is preferred that the claw poles are formed by laminating metal sheets layered one on top of another along a circumferential direction relative to a rotary shaft.

According to the 11th aspect of the present invention, in the rotating electrical machine according to the 10th aspect, it is preferred that the claw poles are each constituted with at least two laminated core blocks and the core blocks are each connected over a portion thereof constituting a yoke, with another laminated core block that assumes an opposite polarity and is present at a next position along the circumferential direction.

According to the 12th aspect of the present invention, in the rotating electrical machine according to the 1st aspect, it is preferred that a leader wire of the stator winding is drawn out through a clearance between the claw poles.

According to the 13th aspect of the present invention, in the rotating electrical machine according to the 1st aspect, it is preferred that the claw poles and the core back at the stator are constituted of a soft magnetic composite.

According to the 14th aspect of the present invention, in the rotating electrical machine according to the 1st aspect, it is preferred that the stator includes a holding plate that holds at least some of the claw poles, the core back and the stator winding and is used to position components relative to one another.

According to the 15th aspect of the present invention, in the rotating electrical machine according to the 14th aspect, it is preferred that the stator stages are each held between two holding plates along the axial direction.

According to the 16th aspect of the present invention, in the rotating electrical machine according to the 14th aspect, it is preferred that: the stator stages are each held between two holding plates along the axial direction; and the two holding plates each include a projection and a groove at which the projection fits to fix a relative position between the two stator stages when the two stator stages are stacked one on top of the other along the axial direction.

According to the 17th aspect of the present invention, in the rotating electrical machine according to the 1st aspect, it is preferred that: the rotating electrical machine further comprises a cylindrical bobbin used to hold the stator winding; and the bobbin includes a groove formed at an outer side surface thereof, which is used to hold at least at some of the claw poles or the core back and also to position components relative to one another.

According to the 18th aspect of the present invention, in the rotating electrical machine according to the 1st aspect, it is preferred that the rotating electrical machine further comprises a rectifier circuit that converts an AC current output from the stator winding to a DC current.

According to the 19th aspect of the present invention, in the rotating electrical machine according to the 18th aspect, it is preferred that the rotor is a Ludell-type claw pole rotor.

According to the 20th aspect of the present invention, in the rotating electrical machine according to the 1st aspect, it is preferred that a permanent magnet is disposed at the rotor.

According to the 21th aspect of the present invention, a rotatingelectricalmachine comprises: a stator that includes a plurality of magnetic poles; stator windings constituted with three-phase coils corresponding to a U-phase, a V-phase and a W-phase, which are wound at the magnetic poles; and a rotor rotatably disposed at a position facing the magnetic poles at the stator, and coils corresponding to a plurality of phases are wound together at least at one magnetic pole.

According to the 22th aspect of the present invention, in the rotating electrical machine according to the 21st aspect, it is preferred that a multiphase traveling wave magnetic field is generated at the stator via the coils corresponding to the plurality of phases wound together at least at one magnetic pole.

According to the 23th aspect of the present invention, in the rotating electrical machine according to the 22nd aspect, it is preferred that groups of coils are wound each through distributed winding or concentrated winding at the stator.

According to the 24th aspect of the present invention, in the rotating electrical machine according to the 22nd aspect, it is preferred that amplitudes of magnetic fluxes generated via different coil groups each constituted with three-phase coils, which are used to generate a multiphase traveling wave magnetic field at the stator, are substantially equal to one another.

According to the 25th aspect of the present invention, in the rotating electrical machine according to the 22st aspect, it is preferred that phases of magnetic fluxes generated via different coil groups each constituted with three-phase coils, which are used to generate a multiphase traveling wave magnetic field at the stator are offset by a substantially uniform extent along a rotating direction.

According to the 26th aspect of the present invention, in the rotating electrical machine according to the 22nd aspect, it is preferred that a ratio of the numbers of turns at the magnetic poles is adjusted so as to achieve uniformity with regard to total sums of coil turns corresponding to the U-phase, the V-phase and the W-phase at all the magnetic poles at the stator.

According to the 27th aspect of the present invention, in the rotating electrical machine according to the 22nd aspect, it is preferred that a ratio of numbers of turns at the magnetic poles is adjusted so as to achieve substantial uniformity with regard to inductances at the three-phase coils corresponding to the U-phase, the V-phase and the W-phase.

According to the 28th aspect of the present invention, in the rotating electrical machine according to the 22nd aspect, it is preferred that: the rotating electrical machine constitutes a multiphase motor; and a circuit system via which coil currents are supplied to the three-phase coils corresponding to the U-phase, the V-phase and the W-phase is constituted with three power transistors.

According to the 29th aspect of the present invention, a rotating electrical machine comprises: a stator that includes two stator stages each constituted with a plurality of claw poles extending toward opposite sides along an axial direction at alternate positions and a ring-shaped core back that forms a magnetic path between the claw poles, the two stator stages being stacked over along the axial direction; a stator winding formed by winding a coil in a ring shape and disposed in a space enclosed by the claw poles and the core back at the stator stages; and a rotor rotatably disposed at a position facing the claw poles of the stator, and: the stator winding disposed at least at one of the stator stages is constituted with coils corresponding to a plurality of phases among three phases that are a U-phase, a V-phase and a W-phase.

According to the 30th aspect of the present invention, in the rotating electrical machine according to the 29th aspect, it is preferred that the two stator stages at the stator are disposed with an offset along a circumferential direction by an extent equivalent to an electrical angle $\varnothing$ assuming a value which is approximately a semi-integral multiple of n.

According to the 31st aspect of the present invention, in the rotating electrical machine according to the 30th aspect, it is preferred that the angle $\varnothing$ assumed as the offset at the stator is a 90° electrical angle.

According to the 32nd aspect of the present invention, in the rotating electrical machine according to the 29th aspect, it is preferred that: the stator includes stator windings corresponding to a plurality of phases; and stator windings corresponding to all the phases are wound at one of the two stator stages and a stator winding corresponding to a certain phase excluding a specific phase is wound at the other stator stage.

According to the 33rd aspect of the present invention, in the rotating electrical machine according to the 32nd aspect, it is preferred that the stator windings corresponding to the plurality of phases are each wound with a number of turns so that composite magnetic fluxes achieved via the two stator stages achieve magnetic flux linkage waveforms corresponding to the plurality of phases.

According to the 34th aspect of the present invention, in the rotating electrical machine according to the 29th aspect, it is preferred that: the stator includes stator windings corresponding to three phases; and stator windings corresponding to all three phases are wound at one of the two stator stages and stator windings corresponding to two phases excluding a specific phase are wound at the other stator stage.

BRIEF DESCRIPTION OF THE DRAWINGS

FIG. 1 shows the structure of the stator in a rotating electrical machine achieved in an embodiment of the present invention;

FIGS. 2A and 2B show the A core and the B core in FIG. 1 in sectional views;

FIG. 3 shows the structure of the rotor in the rotating electrical machine in FIG. 1;

FIG. 4 shows the rotor in FIG. 3 fitted with the stator in FIG. 1;

FIG. 5 is a partial sectional view of FIG. 4;

FIG. 6 shows the stator in FIG. 1 in a development taken along the circumferential direction;

FIGS. 7A and 7B each illustrate a magnetic flux flow pattern in the development presented in FIG. 6;

FIG. 8 is a sectional view of a dynamo electric generator adopting the embodiment shown in FIG. 1;

FIG. 9 is a perspective of the rotor in FIG. 8;

FIG. 10 is a partial sectional view of FIG. 8;

FIG. 11 is a circuit diagram of the dynamo electric generator in FIG. 8;

FIGS. 12A ~ 12F show the structure of a stator core block achieved in another embodiment of the present invention;

FIGS. 13A ~ 13C show the structure of a half stator corresponding to a given stage in a claw pole-type rotating electrical machine achieved in an embodiment of the present invention;

FIGS. 14A and 14B respectively present a perspective and a front view of a stator corresponding to a given stage in the claw pole-type rotating electrical machine achieved in an embodiment of the present invention;

FIG. 15 shows the structure of the stator achieved in the embodiment of the present invention in a sectional view;

FIG. 16 illustrates how stators maybe assembled together along the axial direction in an embodiment of the present invention;

FIG. 17 illustrates how a motor equipped with the stator unit achieved in an embodiment of the present invention may be assembled;

FIGS. 18A ~ 18C each shows the structure of a holding plate achieved in an embodiment of the present invention;

FIGS. 19A ~ 19C schematically illustrate the shape of a half stator corresponding to a given stage achieved in an embodiment of the present invention and a method that may be adopted when manufacturing the stator corresponding to a given phase;

FIGS. 20A ~ 20C schematically illustrate the shape of a stator corresponding to a given stage achieved in an embodiment of the present invention and a method that may be adopted when manufacturing the half stator corresponding to a given phase;

FIG. 21 shows a tapered stator claw pole at a laminated core block in an embodiment of the present invention;

FIG. 22A presents a perspective and FIG. 22B presents a front view and a side elevation, all illustrating the structure of a bobbin having a function of holding fast the laminated core blocks in an embodiment of the present invention, with which the coil winding can be insulated and protected;

FIG. 23 is a perspective showing the bobbin in FIGS. 22A and 22B with the winding set therein, in a partial sectional view;

FIGS. 24A and 24B illustrate how a core block may be completed by disposing laminated core block claw poles according to the present invention at the bobbin in FIGS. 22A and 22B with the windings installed therein;

FIGS. 25A ~ 25C illustrate a method for obtaining laminated core block claw poles according to the present invention without having to perform a bending process;

FIGS. 26A ~ 26G each illustrate an alternative method for manufacturing laminated core block claw poles according to the present invention;

FIGS. 27A ~ 27C each illustrate a method for fixing sheets constituting laminated core block claw poles according to the present invention through welding;

FIGS. 28A~ 28C illustrate a method for fixing sheets constituting laminated core block claw poles according to the present invention through caulking;

FIGS. 29A and 29B illustrate a method for fixing the sheets constituting a laminated core block claw pole according to the present invention, through staggered caulking so as to inhibit the occurrence of eddy currents;

FIGS. 30A and 30B illustrate methods for fixing the sheets constituting laminated core block claw poles according to the present invention through taping and bonding;

FIGS. 31A and 31B each illustrate a structure that may be adopted at a laminated core block claw pole according to the present invention at a section thereof (more specifically over the inner circumferential area R);

FIGS. 32A ~ 32C illustrate the structure of a rotor in an on-vehicle generator, constituted with laminated core block claw poles achieved in an embodiment of the present invention (specific shapes that the grooves formed at the claw surface may assume);

FIGS. 33A ~ 33C illustrate how the characteristics of an on-vehicle generator that includes laminated core block claw poles according to the present invention may be affected by the shape of the grooves formed at the rotor claw surfaces;

FIG. 34 illustrates structures that may be adopted at the rotor in an on-vehicle generator that includes laminated core block claw poles according to the present invention;

FIGS. 35A and 35B illustrate the structure of a stator core block achieved in an embodiment of the present invention;

FIGS. 36A ~ 36C illustrate the structure of a ring-shaped yoke portion achieved in an embodiment of the present invention;

FIGS. 37A ~ 37C show the structure of a half stator corresponding to a given stage in a claw pole-type rotating electrical machine achieved in an embodiment of the present invention;

FIGS. 38A and 38B respectively present a perspective and a front view of a stator corresponding to a given stage in the claw pole-type rotating electrical machine in the embodiment of the present invention;

FIG. 39 shows the structure of the stator achieved in an embodiment of the present invention in a sectional view;

FIG. 40 illustrates how stators in the embodiment may be assembled together along the axial direction;

FIG. 41 shows the structure of a holding plate achieved in an embodiment of the present invention;

FIG. 42 shows the structure of the holding plate in the embodiment of the present invention;

FIG. 43 is a perspective of a stator corresponding to a given stage achieved in an embodiment of the present invention;

FIG. 44A presents a perspective and FIG. 44B presents a front view and a side elevation, all illustrating the structure of a bobbin having a function of holding fast the laminated core blocks achieved in an embodiment of the present invention, with which the coil winding can be insulated and protected;

FIG. 45 is a perspective showing the bobbin in FIGS. 44A and 44B with the winding set therein, in a partial sectional view;

FIGS. 46A ~ 46C illustrate how a core block may be completed by disposing laminated core block claw poles according to the present invention at the bobbin in FIGS. 44A and 44B with the winding installed therein;

FIG. 47 shows a tapered stator claw pole at a laminated core block achieved in an embodiment of the present invention;

FIG. 48A shows a phase stator in a claw pole rotating electrical machine achieved in an embodiment of the present invention, assuming a structure through which the extent of distortion in the induced voltage can be reduced and FIG. 48B presents a graph indicating the induced voltage effect achieved through the distortion-reducing structure;

FIG. 49 shows a ring-shaped yoke portion constituted with split pieces as achieved in an embodiment of the present invention, which allows the claw pole rotating electrical machine to be provided as a large unit with ease;

FIG. 50 shows the structure of a holding plate that may be used to hold together the laminated core blocks and the split yoke portion pieces in FIG. 49;

FIG. 51 shows how the coils in a rotating electrical machine achieved in an embodiment of the present invention may be linked;

FIG. 52 presents an example of a positional relationship with which the three phase coils, i.e., the U-phase coil, the V-phase coil and the W-phase coil in a stator in a rotating electrical machine achieved in an embodiment of the present invention may be laid out;

FIG. 53 shows a rotating electrical machine achieved in an embodiment of the present invention;

FIG. 54 shows the stator in the rotating electrical machine achieved in an embodiment of the present invention; and

FIGS. 55A and 55B present examples of a positional arrangement that may be adopted for the coils in the stator in the rotating electrical machine achieved in an embodiment of the present invention.

DESCRIPTION OF PREFERRED EMBODIMENTS

The embodiments of the present invention are now described in reference to the drawings.

-First Embodiment-

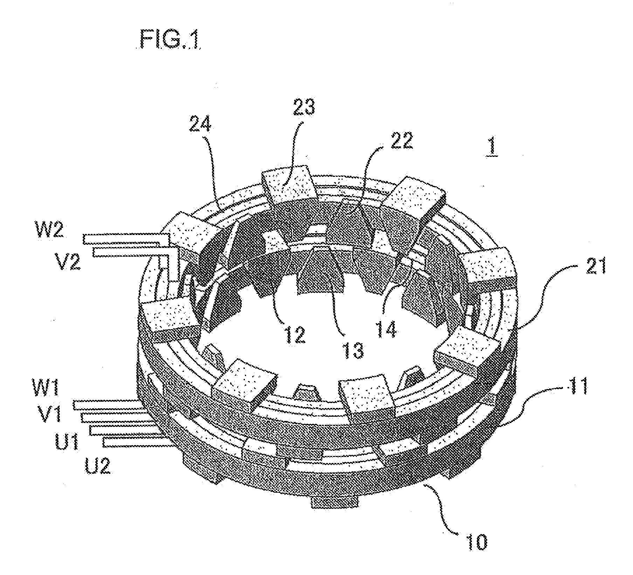

FIG. 1 shows the stator of the claw pole-type rotating electrical machine achieved in an embodiment of the present invention.

A stator unit 1 is made up with two stator stages, i.e., an A core 10 and a B core 20. The two stator stages respectively include stator coils 14 and 24 each formed by winding an electrical conductor formed in a ring shape a plurality of times, ring-shaped core backs 11 and 21 respectively disposed so as to cover the outer circumferences of the stator coils 14 and 24 and claw poles (claw magnetic poles) 12 and 13 and claw poles (claw magnetic poles) 22 and 23 with claw poles 12 and 13 assuming reverse orientations to each other and taking up alternate positions along the circumferential direction at a side surface along the axial direction at the corresponding core back 11 and the claw poles 22 and 23 assuming reverse orientations to each other and taking up alternate positions along the circumferential direction at a side surface along the axial direction at the corresponding core back 21. Namely, the stator coil 14 is wound in a ring shape at the A core 10 through the areas enclosed by the core back 11 and the claw poles 12 and 13, whereas the stator coil 24 is wound in a ring shape at the B core 20 through the areas enclosed by the core back 21 and the claw poles 22 and 23. The coils are each held along the axial direction at the stator unit 1 between each claw pole and the next claw pole, which assumes the opposite polarity. The core backs each form the magnetic path between adjacent magnetic poles. The coils include a U1 coil, a U2 coil, a V1 coil, a V2 coil, a W1 coil and a W2 coil and their leader wires are shown in the figure. These coils are to be described in detail later.

The core backs 11 and 21 and the claw poles 12, 13, 22 and 23 in the embodiment are constituted of a soft magnetic composite. It is to be noted that the stator cores may be made up with an assembly of laminated metal sheets constituted of an iron-group material. In such a case, it should be ensured that adjacent cores do not couple with each other either electrically or magnetically (they are laminated with a nonmagnetic, nonconductive material inserted between them).

The stator unit 1 includes two stator stages, i.e., the A core 10 and the B core 20, disposed along the direction in which the rotary shaft extends and the poles at the two stator stages are set with the phase difference relative to each other equal to an electrical angle of approximately 90°. Namely, in a stator assuming an N electrical-angle cycle structure, the poles at the two stator stages are offset by a mechanical angle of 90°/N along the circumferential direction in which the rotor rotates.

The B core 20 assumes the forward phase along the rotating direction, preceding the A core 10 by an electrical angle of approximately 90°. At the two claw pole cores, three phase coils, e.g., a U-phase coil, a V-phase coil and a W-phase coil are wound together. $N_{AU}$, $N_{AV}$, and $N_{AW}$ represent the numbers of turns corresponding to the U, V and W coils at the A core 10, whereas $N_{BU}$, $N_{BV}$, and $N_{BW}$ represent the numbers of turns corresponding to the U, V and W coils at the B core 20. When the number of coil turns indicates a negative value, the particular coil is wound in the reverse direction. In addition, under normal circumstances the number of coil turns is not limited to a positive or negative integer, as long as it is indicated by a positive or negative real number. When the number of coil turns is a non-integer, the coil entry point and the coil exit point are at different positions.

With $\varnothing_A$ and $\varnothing_B$ indicating magnetic fluxes each interlinking with a single turn of the coil within the A core 10 and the B core 20, magnetic flux linkages $\Phi_U$, $\Phi_V$ and $\Phi_W$ interlinking with the three phase coils, i.e., the U, V and W coils, are expressed as in (1), (2) and (3) below.

$$\Phi_U = N_{AU}\varnothing_A + N_{BU}\varnothing_B \quad \cdots \quad (1)$$

$$\Phi_V = N_{AV}\varnothing_A + N_{BV}\varnothing_B \quad \cdots \quad (2)$$

$$\Phi_W = N_{AW}\varnothing_A + N_{BW}\varnothing_B \quad \cdots \quad (3)$$

The numbers of coil turns $N_{AU}$, $N_{AV}$, and $N_{AW}$ and the numbers of coil turns $N_{BU}$, $N_{BV}$, and $N_{BW}$ are determined so as to render a 120° phase difference between the individual magnetic flux linkages. The embodiment is described by assuming that the magnetic fluxes $\varnothing_A$ and $\varnothing_B$ manifest a phase difference relative to each other by 90°. By defining $\varnothing_A$ and $\varnothing_B$ as $\varnothing_A = \varnothing_0\sin\omega t$ and $\varnothing_B = \varnothing_0\cos\omega t$ with $\omega t$ representing the electrical angle, the phase of $\varnothing_B$ is ahead of the phase of $\varnothing_A$ by 90°. Accordingly, $N_{AU}$, $N_{BU}$, $N_{AV}$, $N_{BV}$, $N_{AW}$, and $N_{BW}$ can be written as in (4), (5) and (6) below.

$$N_{AU} = N\cos\theta, \qquad N_{BU} = N\sin\theta \qquad \cdots \quad (4)$$

$$N_{AV} = N\cos(\theta - 2\pi/3), \quad N_{BV} = N\sin(\theta - 2\pi/3) \quad \cdots \quad (5)$$

$$N_{AW} = N\cos(\theta - 4\pi/3), \quad N_{BW} = N\sin(\theta - 4\pi/3) \quad \cdots \quad (6)$$

Based upon expressions (4), (5) and (6), the magnetic flux linkages at the three phase coils can be expressed as in (7), (8) and (9) below.

$$\Phi_U = N\varnothing_0\sin(\omega t + \theta) \quad \cdots \quad (7)$$

$$\Phi_V = N\varnothing_0\sin(\omega t + \theta - 2\pi/3) \quad \cdots \quad (8)$$

$$\Phi_W = N\varnothing_0\sin(\omega t + \theta - 4\pi/3) \quad \cdots \quad (9)$$

$\theta$ represents a parameter that determines the degree of freedom with which the distribution ratios of the number of turns of the U, V and W coils at the A core 10 and the B core 20 are adjusted. By combining the magnetic flux linkages at the A core 10 and core B 20 disposed with a specific phase difference, as described above, three-phase magnetic flux linkage waveforms can be obtained.

Specific examples of numerical values thatmaybe assumed for the numbers of coil turns expressed in (4) through (6) are presented below. Assuming that N = 6 and $\theta = 0$,

$$N_{AU} = 6 \qquad N_{BU} = 0$$

$$N_{AV}=-3 \qquad N_{BV}=3\sqrt{3}\fallingdotseq5.2$$

$$N_{AW}=-3 \qquad N_{BW}=-3\sqrt{3}=-5.2$$

The V and W coils at the B core 20 may instead be wound with integral numbers of turns and, in such a case, $N_{BV} = 5$ and $N_{BW} = -5$.

FIG. 1 shows the coils wound with such numbers of turns. In the figure, U-, V- and W-phase coils are wound at the A core 10, whereas only V- and W-phase coils are wound at the B core 20 with no U-phase coil. Accordingly, four leader lines are led out from the A core 10 and two leader lines are led out from the B core 20.

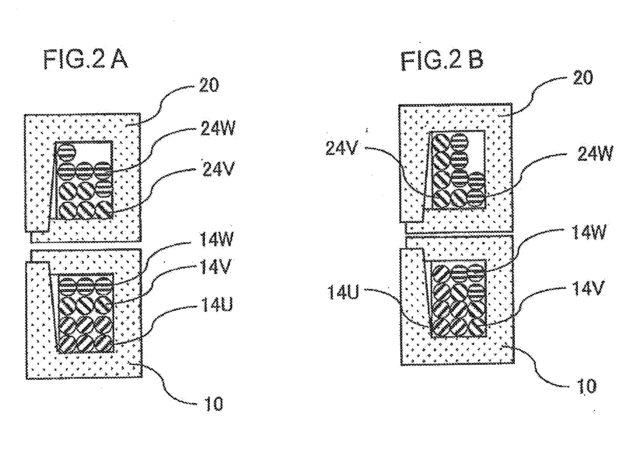

FIGS. 2A and 2B each show the U-phase coil 14U, the V-phase coils 14V and 24V and the W-phase coils 14W and 24W wound through the A core 10 and the B core 20 in the stator unit assuming the two-stage structure in a sectional view. In the example presented in FIG. 2A, the coils are wound in the order of the U-phase, the V-phase and the W-phase, from the bottom side toward the top side, whereas the coils are wound in the example presented in FIG. 2B in the order of the U-phase, the V-phase and the W-phase from the inner side toward the outer side. A coil assembly with individual coils wound in advance in either manner may be installed.

As described above, coils corresponding to a plurality of phases are installed at least at one of the stator stages. The numbers of coil turns are set so that the phases of magnetic fluxes induced at the stator cores disposed at the upper stage and the lower stage are offset by an electrical angle of approximately 90° relative to each other.

Assuming that the rotor is structured so that no change occurs in the rotational characteristics of the rotating machine when the rotor is set in the reverse direction along the rotary shaft and that the A core 10 and the B core 20 assume structures basically identical to each other except for certain fine details thereof, the self inductances of single turn coils at the A core 10 and the B core 20 have the identical L. The U coils at the A core 10 and the B core 20 are connected in series. The V coils and the W coils at the two cores are also connected in series. Accordingly, the self-inductances $L_u$, $L_v$ and $L_w$ of the U, V and W coils are expressed as in (10), (11) and (12) below.

$$L_U=L\left(N_{AU}^{2}+N_{BU}^{2}\right) \quad\cdots\quad (10)$$

$$L_V=L\left(N_{AV}^{2}+N_{BV}^{2}\right) \quad\cdots\quad (11)$$

$$L_W=L\left(N_{AW}^{2}+N_{BW}^{2}\right) \quad\cdots\quad (12)$$

By incorporating expressions (4) ~ (6) for substitution in expressions (10) ~ (12), an expression; $L_u = L_v = L_w = LN^2$, indicating that the self inductances at all coils are equal to one another, is written. Even when the coils are wound with integral numbers of turns through rounding off, the self inductances are substantially equal to one another, although there may be a slight extent of variance.

Since the coils corresponding to different phases are wound together, the mutual inductances, too, need to be fully factored in. By approximating the factor of coupling with which different coils are coupled with each other to 1, an inductance matrix that reflects both the self inductances and the mutual inductances can be expressed as; $L_{ij} = L(N_{ai}NAj + N_{bi}NBj)$, with i, j = 1, 2 and 3 and the individual numerals indicating the U, V and W coils. For instance, L12 indicates the mutual inductance manifested via a U coil and a V coil, whereas L11 indicates the self inductance of the U coil. By incorporating expressions (4) - (6) for substitution, the expression above can be rewritten as L11 = L22 = L33 = (3/2) LN2. Namely, this is in effect equivalent to 3/2 times the self inductance with a mutual inductance of 0. In other words, even when the mutual inductances are taken into consideration, the inductances of the various coils are equal to one another. Accordingly, uniform waveforms can be achieved with regard to the electric currents generated via the individual coils by avoiding magnetic saturation at the A core and the B core and ensuring that magnetic fluxes are primarily formed with the fundamental wave component.

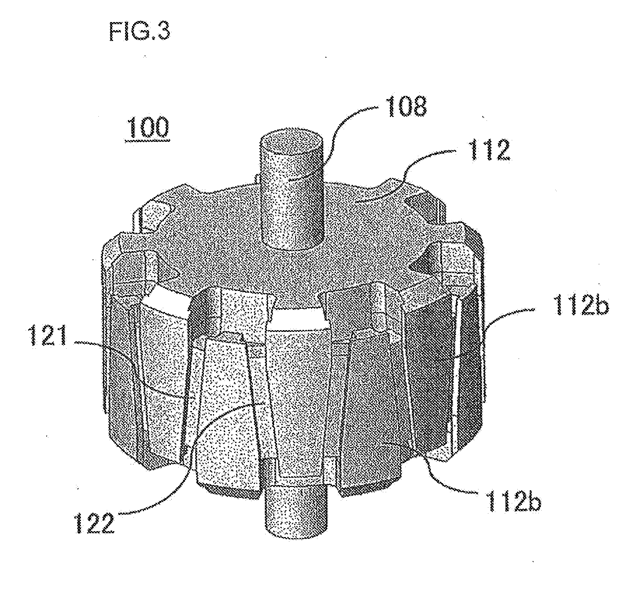

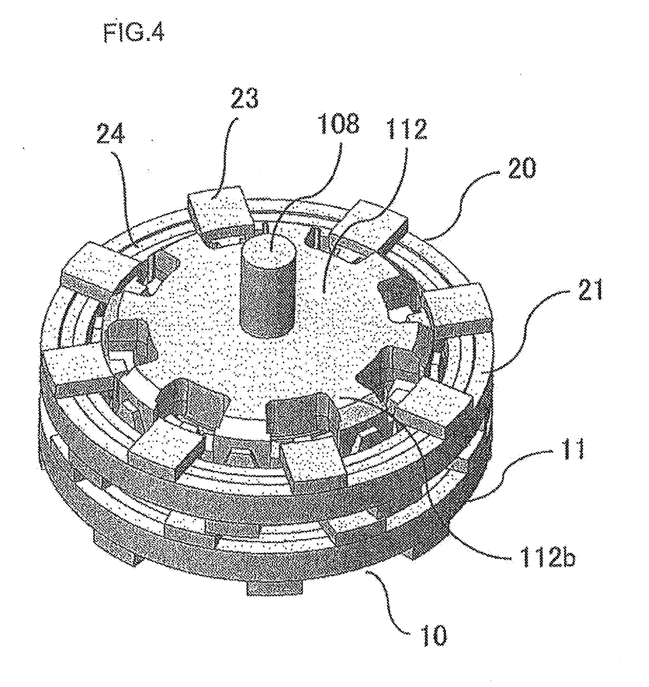

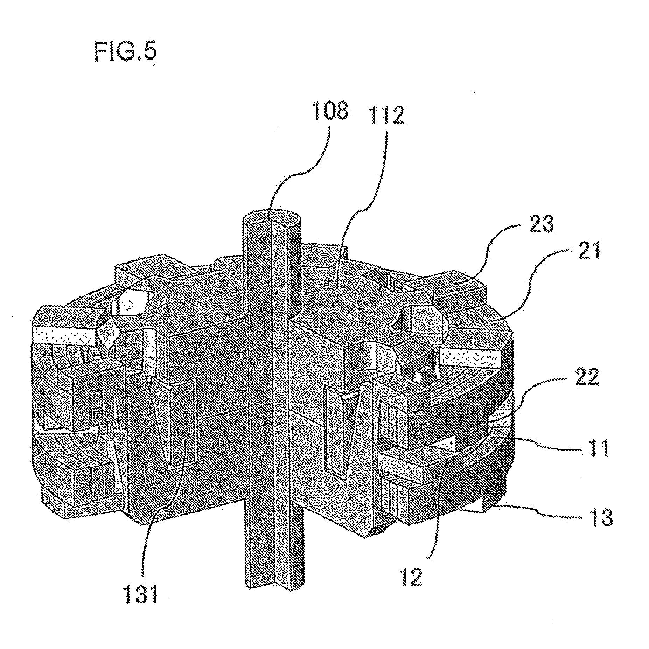

FIG. 3 shows the structure of a rotor 100 to be rotatably disposed at a position facing opposite the claw poles at the stator unit 1. FIG. 4 is a perspective of the rotor 100 inserted at the stator unit 1 and FIG. 5 presents a partial sectional view of FIG. 4. In this example, the present invention is adopted in a Ludell-type generator, which includes a rotor core 112 fixed onto a rotary shaft 108. The rotor core 112 includes claw pole portions 112a and 112b, with magnets 121 and 122 held between successive claw poles set next to each other. The rotor core 112 and the claw pole portions 112a and 112b, at least, are constituted of a magnetic material. It is to be noted that a field coil 131 is wound with a plurality of turns along the circumferential direction over areas enclosed by the axial center of the rotor core 112, the claw pole portions 112a and 112b and the magnets 121 and 122. Slip rings and brushes (not shown) disposed at the rotor are connected to the field coil 131 and as a DC current is supplied to the field coil, a magnetic flux is generated.

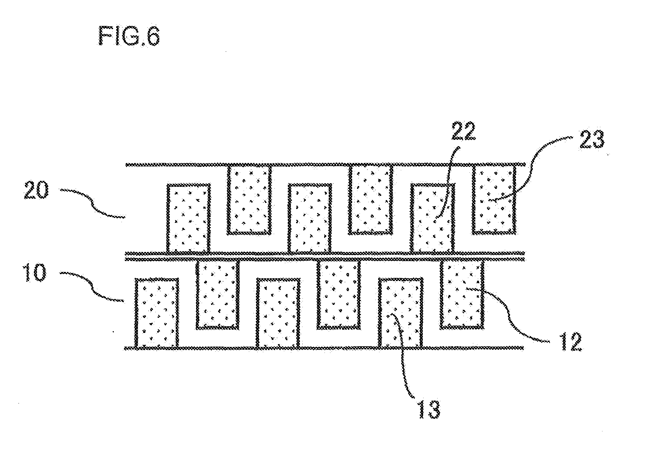

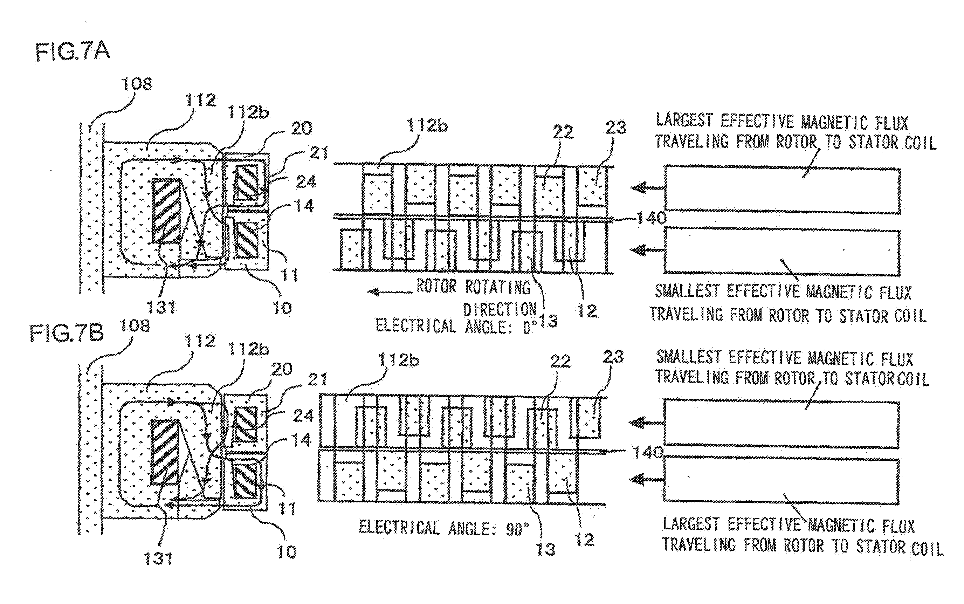

FIGS. 6, 7A and 7B illustrate flows of magnetic fluxes that may be observed in the embodiment. FIG. 6 is a schematic development of the stator unit 1 taken from the internal circumferential side (from the rotor) of the stator unit 1 along the circumferential direction. While the claw poles 12, 13, 22 and 23 in FIG. 1 assume a tapered shape with the width thereof altered from the front end side through the base side, FIG. 6 shows the claw poles in a rectangular shape in a schematic illustration. It will be obvious that the present invention may be adopted in conjunction with claw poles actually assuming a rectangular shape as well.

FIGS. 7A and 7B each indicate a magnetic flux flow by using the schematic development presented in FIG. 6. In reference to the pole positions in FIG. 7A, the pole positions in FIG. 7B are advanced by an electrical angle of 90°. Since the claw poles 22 and 23 at the B core 20 (at the upper stage in the figures) overlap the rotor 100 in FIG. 7A, the magnetic flux generated at the rotor 100 is transmitted from a claw pole 22 to the core back 21 and then from the core back 21 to a claw pole 23 present next to the claw pole 22, and the magnetic flux thus circles around the stator coil 24 inducing an electric current at the interlinking stator coil 24. At the A core 10 (at the lower stage in the figures), the claw poles 12 or 13 overlap with the claw pole portions of the rotor 100 so as to bridge them in FIG. 7A and for this reason, the magnetic flux generated at the rotor 100 is shorted at the corresponding claw pole at the stator unit 1 in the condition shown in FIG. 7A. As a result, the magnetic flux does not reach the core back 11 or only a very small quantity of magnetic flux actually reaches the core back 11. In the condition shown in FIG. 7B with the claw pole positions advanced by a 90° electrical angle, on the other hand, the effective magnetic flux at the A core 10 (at the lower stage in the figure) achieves a maximum level but the effective magnetic flux at the B core 20 is reduced to a minimum level (substantially 0).

In other words, the magnetic flux from the rotor 100 is made to concentrate in either core, and thus, even when the level of the magnetomotive force on the rotor side is lowered, a greater electric current can still be generated.

It is to be noted that compared to a structure with a given phase allocated to one of three stator stages, the structure adopted in the embodiment allows the claw pole portions 112a and 112b of the rotor 100 and the claw poles 12, 13, 22 and 23 at the stator unit 1 to face opposite each other over a greater area. While the claw poles at the individual stages of the stator unit 1 need to be disposed so that the phase of the claw poles at one stage is offset relative to the phase of the claw poles at the other stage, the claw poles at the rotor 100 invariably extend along the axial direction through all the stages. Thus, compared to a structure with the three stator stages each allocated to a given phase, the structure adopted in the embodiment with the coils corresponding to a plurality of phases disposed together at least at one stator stage so as to reduce the number of stator stages (while there are two stator stages in the embodiment, the number of stator stages, even when there are more than two stator stages, is still smaller than that in the structure with each stator stage allocated to a specific phase), allows the claw poles at the stator to face opposite the claw poles at the rotor 100, assuming a linear shape, over a greater area. When the claw poles face opposite each other over a greater area, the effective magnetic flux increases, which, in turn, improves the electrical characteristics. In the case of a generator, a greater level of power can be output, whereas in the case of a motor, a higher level of efficiency and higher output are achieved.

It is to be noted that if there is any magnetic flux leakage occurring between the A core 10 and the B core 20, harmonics are bound to enter the respective magnetic flux waveforms. In order to disallow entry of such harmonics, a gap 140, the size of which is set within a range over which the extent of magnetic flux leakage remains small enough to be tolerated, may be formed between the A core 10 and the B core 20. Assuming that there is an air gap of approximately 0.4 mm between the rotor 100 and the stator unit 1, a gap of approximately 2 mm or more may be formed between the A core 10 and the B core 20 in order to limit the extent of magnetic flux leakage from the A core 10 to the B core 20 and vice versa within an allowable range.

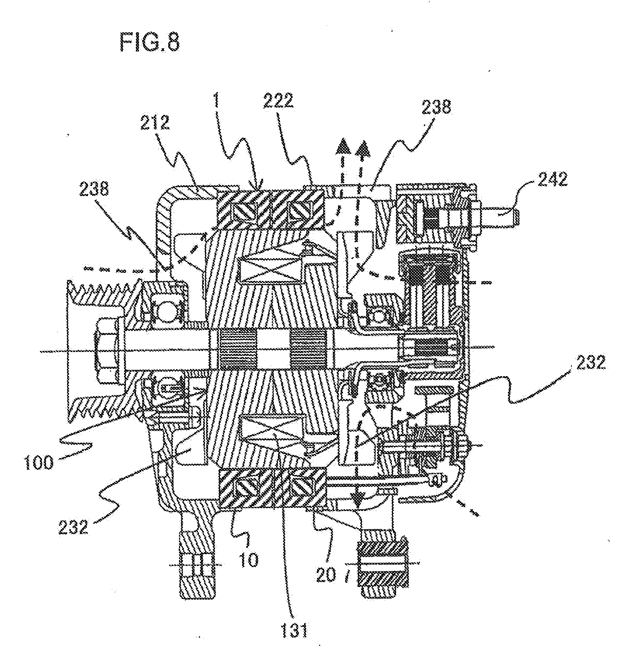

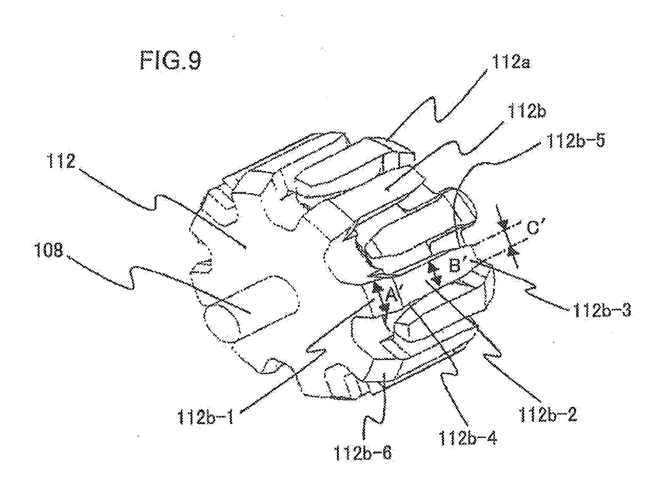

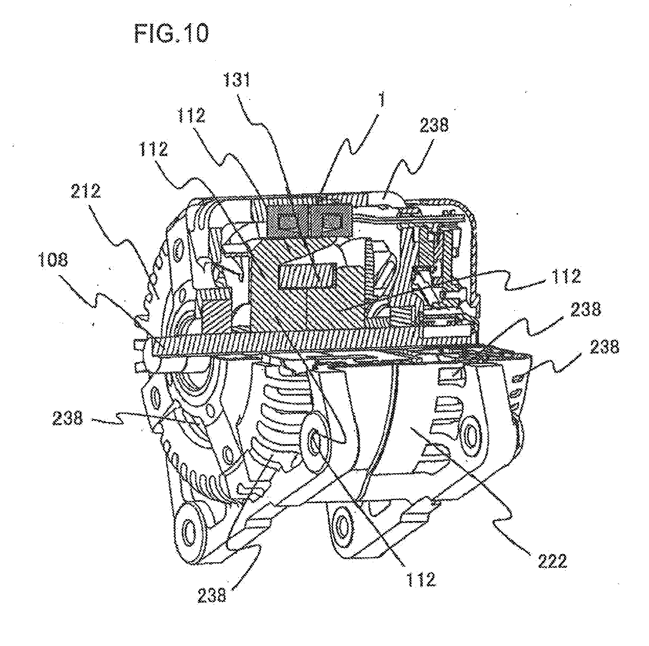

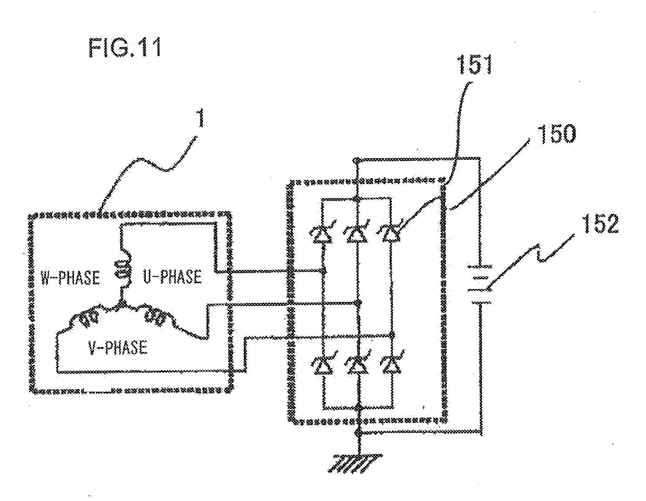

Next, in reference to FIGS. 8 ~ 11, an embodiment achieved by equipping a vehicle alternator (an automotive AC generator) with the stator unit 1 in the embodiment described above, is described. FIG. 8 is a sectional view of the vehicle alternator taken over a side surface thereof, FIG. 9 is a perspective of the rotor in the vehicle alternator, FIG. 10 is a perspective of the vehicle alternator in a partial sectional view and FIG. 11 is a circuit diagram pertinent to the vehicle alternator. The stator unit 1 is enclosed between a front-side housing 212 shown on the left side in FIG. 8 and the rear-side housing 222 shown on the right side in the figure. The stator unit 1 includes the A core 10 and the B core 20 disposed side-by-side along the rotary shaft.

A Ludell-type rotor 100 is rotatably disposed further inward relative to the stator unit 1 with a clearance formed between the stator unit and the rotor 100. The shaft is rotatably held via bearings disposed at the front-side housing 212 and the rear-side housing 222. The Ludell-type rotor 100 shown in FIG. 9, fixed to the shaft, rotates together with the rotary shaft 108.

As shown in FIG. 9, the Ludell-type rotor 100 includes a set of claw pole portions 112b each extending from the front side toward the rear side and another set of claw pole portions 112b each extending from the rear side to the front side. Further inward relative to the first set of claw pole portions 112a and the second set of claw pole portions 112b, a field coil 131 that generates a magnetic flux based upon a field current supplied thereto is disposed.

A pulley disposed at the rotary shaft 108 is caused to rotate with the rotational force transmitted from an internal combustion engine installed in the vehicle via a motive power transmission belt. The rotation of the pulley then causes the Ludell-type rotor 100 to rotate, thereby inducing AC power at the stator unit 1. The AC power undergoes full wave rectification at a rectifier circuit 151 constituted with diodes 150, such as that shown in FIG. 11. The DC current output from a terminal 242 as a result charges a storage battery 152 installed in the vehicle.

Two fans 232, fixed to the rotary shaft 108 on the two sides of the Ludell-type rotor 100, are used to cool the inside of the vehicle alternator. As the rotary shaft 108 rotates, air is drawn in through vents 238 formed at the front-side housing 212 and the rear-side housing 222 and then discharged through the vents.

While the Ludell-type rotor 100 in FIG. 9 includes 16 poles, FIG. 9 simply presents a schematic illustration and the Ludell-type rotor 100 essentially should include the same number of poles as the number of magnetic poles present at the individual stators constituting the stator unit 1. In other words, if there are 20 poles at each stator constituting the stator unit 1, there should be 20 poles at the Ludell-type rotor 100. The claw pole portions 112a in the first set and the claw pole portions 112b in the second set assume identical shapes with a width A thereof measured along the circumferential direction at the base of the claw pole assuming a large value, a width B thereof measured along the circumferential direction over the area facing opposite the stator unit 1 assuming a smaller value and a width C thereof measured along the circumferential direction further frontward assuming an even smaller value. Since the magnetic flux density at the claw front end is lower, magnetic saturation does not occur readily even if the width C along the circumferential direction assumes a small value. The Ludell-type rotor 100 may rotate at over 10,000 rpm and accordingly, it is desirable to ensure that an excessively high level of centrifugal force does not manifest. For this reason, the width C measured along the circumferential direction at the claw front end is set as small as possible. The small width assumed at the front end of the rotor claw pole reduces the extent to which the front end of the claw pole is lifted by the centrifugal force, which, in turn, allows the stator unit 1 and the Ludell-type rotor 100 to be disposed with a smaller distanced from each other. With the distance between the stator unit and the rotor reduced, better efficiency is achieved.

The embodiment requires only two stages of stator cores each assuming a claw pole structure. In other words, it requires one fewer part compared to that required in the three stage structure in the related art and thus, the structure achieved in the embodiment canbe manufactured at a relatively low cost. Since it requires a smaller number of parts, the stator unit can be provided as a more compact apparatus. Furthermore, substantially equal inductances can be generated and thus substantially uniform current generation characteristics can be achieved at all the phases simply by winding the coils in a simple ring shape.

In addition, as explained earlier, an electric current at a level comparable to that achieved in the three stage structure can be generated with a relatively low magnetomotive force. The expressions indicating the numbers of coil turns in (4) ~ (6) each include the parameter θ used to determine the degree of freedom with regard to the ratios of numbers of coil turns and also the stator unit includes two stator core stages instead of the three stator core stages in the related art. Consequently, ample space is secured along the rotary shaft and the degree of freedom in design is increased.

As explained earlier, the structure adopted in the embodiment with the coils corresponding to a plurality of phases disposed together at least at one stator stage so as to reduce the number of stator stages (while there are two stator stages in the embodiment, the number of stator stages, even when there are more than two stator stages, is still smaller than that in the structure with each stator stage allocated to a specific phase), allows the claw poles at the stator to face opposite the claw poles at the rotor 100, assuming a linear shape, over a greater area. When the claw poles face opposite each other over a greater area, the effective magnetic flux increases which, in turn, improves the electrical characteristics. In the case of a generator, a greater level of power can be output and an electric current comparable to that generated in conjunction with the three-stage structure can be obtained with a relatively low magneto-motive force, whereas in the case of a motor, a higher level of efficiency and higher output are achieved.

-Second Embodiment-

The second embodiment of the present invention is now described. Apart from the specific features described below, the second embodiment is similar to the first embodiment.

In the embodiment, the magnetic flux at the B core 20 assumes a phase electrically advanced by Ø compared to the phase of the A core 10. While Ø = π/2 in the first embodiment described earlier, the second embodiment represents a more generalized concept. $N_{AU}$, $N_{AV}$, and $N_{AW}$ representing the numbers of coil turns at the U, V and W coils at the A core 10 and the $N_{BU}$, $N_{BV}$, and $N_{BW}$ representing the numbers of coil turns of the U, V and W coils at the B core 20 may be expressed as below.

$$N_{AU}=N\cos\theta_U, \quad N_{BU}=N\sin\theta_U \quad \cdots \quad (13)$$

$$N_{AV}=N\cos\theta_V, \quad N_{BV}=N\sin\theta_V \quad \cdots \quad (14)$$

$$N_{AW}=N\cos\theta_W, \quad N_{BW}=N\sin\theta_W \quad \cdots \quad (15)$$

Based upon the concept that the magnetic fluxes at the A core 10 and the B core 20 are formed as composite magnetic fluxes made up with the magnetic fluxes generated via the three phase coils, the numbers of coil turns need to be set by ensuring that the relationship expressed below is satisfied.

$$\sin\theta_U + p\sin\theta_V + q\sin\theta_W$$

$$=\exp(j\varnothing)(\cos\theta_U + p\cos\theta_V + q\cos\theta_W) \quad \cdots \quad (16)$$

when

$$p=\exp(-j2\pi/3), \quad q=\exp(j2\pi/3) \quad \cdots \quad (17)$$

Parameters $\theta_u$, $\theta_v$, and $\theta_w$ should be determined so as to satisfy the relational expression above. Since expression (16) is made up with two expressions, one related to the real part and the other related to the imaginary part, once any of the parameters $\theta_u$, $\theta_v$, and $\theta_w$ is determined, the other parameters, too, are determined and ultimately, the numbers of coil turns $N_{AU}$, $N_{AV}$, and $N_{AW}$, $N_{BU}$, $N_{BV}$, and $N_{BW}$ are determined. Under these circumstances, the A core 10 should be fixed at a position rotated relative to the B core 20 by $\theta/N_s$ in the mechanical angle along the rotational direction with $N_s$ representing the number of cycles along the circumferential direction in the stator structure.

Since alternate magnetic fields are generated at the claw poles at the A core 10 and the B core 20, what appears to be a traveling wave field is formed. However, as the value of $\varnothing$ becomes close to an integral multiple of n (including when $\varnothing$ is < 0), the magnetic fields at the claw poles at the A core 10 and the B core 20 assume matching polarities with substantially matching timing and thus, no traveling wave field is formed.

For this reason, it is more desirable to set $\varnothing$ to a value close to a semi-integral multiple of $\pi$ ($\pm$ $\pi/2$, $3\pi/2$, $5\pi/2$, ...). $\varnothing$ expressed as $\varnothing = \pi/2 + 2nn$ (n: integer) corresponds to a forward rotation, whereas $\varnothing$ expressed as $\varnothing = -\pi/2 + 2n\pi$ (n: integer) corresponds to a reverse rotation. During a forward rotation, the rotor viewed from the top side rotates along the counterclockwise direction with the A core disposed at the lower stage and the B core disposed at the upper stage in the stator unit. In the first embodiment, $\varnothing$ is $\pi/2$.

The second embodiment is described by assuming that $\varnothing$ is set to a value other than $\pi/2$, e.g., $\varnothing = \pi/3$. The following relational expression can be drawn from the two expressions constituting expression (16), one corresponding to the real part and the other corresponding to the imaginary part.

$$\cos\theta_U + \sin\theta_V = \cos\theta_V + \sin\theta_W$$

$$=\cos\theta_W + \sin\theta_U \quad \cdots \quad (18)$$

When $\theta_U$ assumes a value of, for instance, 0, the following is true.

$$\sin\theta_V = \cos\theta_W - 1 \quad\dots\ (19)$$

$$\cos\theta_V = \cos\theta_W - \sin\theta_W \quad\cdots\ (20)$$

Using the two expressions above, $\cos\theta_V$ is calculated to be -0.689, $\sin\theta_V$ is calculated to be -0.727, $\cos\theta_W$ is calculated to be 0.273 and $\sin\theta_W$ is calculated to be 0. 962. Thus, the numbers of turns of the U, V and W coils at the A core 10 and the B core 20 are determined to be;

$$N_{AU} = N, \qquad N_{BU} = 0$$

$$N_{AV} = -0.689N, \qquad N_{BV} = -0.727N$$

$$N_{AW} = 0.273N, \qquad N_{BW} = 0.962N.$$

When n = 6, they are to be;

$$N_{AU} = 6, \qquad N_{BU} = 0$$

$$N_{AV} = -4.1, \qquad N_{BV} = -4.4,$$

$$N_{AW} = 1.6, \qquad N_{BW} = 5.8.$$

-Third Embodiment-

The third embodiment of the present invention is now described. The present invention may be adopted in multiple phase coils assuming four or more different phases, as well as in conjunction with three phase coils.
In the following description, too, $\varnothing_A$, and $\varnothing_B$ represent magnetic fluxes interlinking with single turn coils inside the A core 10 and the B core 20 respectively. An explanation is now given with regard to M-phase coils. Magnetic flux linkages $\Phi_k$, ... $\Phi_m$ interlinking with the individual coils are expressed as;

$$\Phi_1 = N_{A1}\varnothing_A + N_{B1}\varnothing_B \quad\cdots\ (21)$$

$$\Phi_k = N_{Ak}\varnothing_A + N_{Bk}\varnothing_B \quad\cdots\ (22)$$

$$\Phi_M = N_{AM}\varnothing_A + N_{BM}\varnothing_B \quad\cdots\ (23)$$

The numbers of coil turns $N_{A1}$, $N_{A2}$, ... $N_{AM}$ and the numbers of coils $N_{B1}$, $N_{B2}$, ... $N_{BM}$ are determined so that the electrical phases of the magnetic flux linkages decrease in sequence by $2\pi/M$ at a time starting at $\Phi_1$. The embodiment is described by assuming that the magnetic fluxes $\varnothing_A$ and $\varnothing_B$ manifest a phase difference relative to each other by 90°. By defining $\varnothing_A$ and $\varnothing_B$ as $\varnothing_A = \varnothing_0\sin\omega t$ and $\varnothing_B = \varnothing_0\cos\omega t$ with $\omega t$ representing the electrical angle, the phase of $\varnothing_B$ is ahead of the phase of $\varnothing_A$ by 90°. By assuming $\varnothing_M = 2\pi/M$, $N_{A1}$, $N_{B1}$, $N_{Ak}$, $N_{Bk}$, $N_{AM}$, and $N_{BM}$ can be written as in (24), (25) and (26) below.

$$N_{A1}=N\cos\theta, \qquad\qquad N_{B1}=N\sin\theta \quad\cdots \quad (24)$$

$$N_{Ak}=N\cos[\theta-(k-1)\varnothing_M], \quad N_{Bk}=N\sin[\theta-(k-1)\varnothing_M] \quad\cdots \quad (25)$$

$$N_{AM}=N\cos[\theta-(M-1)\varnothing_M], \quad N_{BM}=N\sin[\theta-(M-1)\varnothing_M] \quad\cdots \quad (26)$$

Based upon expressions (24), (25) and (26), the magnetic flux linkages at the three phase coils can be expressed as in (27), (28) and (29) below.

$$\Phi_1=N\varnothing_0\sin(\omega t+\theta) \quad\cdots \quad (27)$$

$$\Phi_k=N\varnothing_0\sin[\theta-(k-1)\varnothing_M] \quad\cdots \quad (28)$$

$$\Phi_M=N\varnothing_0\sin[\theta-(M-1)\varnothing_M] \quad\cdots \quad (29)$$

$\theta$ represents a parameter that determines the degree of freedom with which the distribution ratios of the number of turns of the U, V and W coils at the A core 10 and the B core 20 are adjusted. By combining the magnetic flux linkages at the A core 10 and core B20 disposed with a specific phase difference, as described above, M phase magnetic flux linkage waveforms can be obtained.

Specific examples of numerical values that maybe assumed for the numbers of coil turns expressed in (24) through (26) are presented below. Assuming that M = 6, N = 6 and $\theta$ = 0,

$$N_{A1}=6, \qquad N_{B1}=0$$

$$N_{A2}=3, \qquad N_{B2}=-3\sqrt{3}\doteqdot-5.2$$

$$N_{A3}=-3, \qquad N_{B3}=-3\sqrt{3}=-5.2$$

$$N_{A4}=-6, \qquad N_{B4}=0$$

$$N_{A5}=-3, \qquad N_{B5}=3\sqrt{3}\doteqdot5.2$$

$$N_{A6}=3, \qquad N_{B6}=3\sqrt{3}=5.2$$

The B2, B3, B5 and B6 coils at the B core 20 may instead be wound with integral numbers of turns and, in such a case, $N_{B2} = -5$, $N_{B3} = -5$, $N_{B5} = 5$ and $N_{B6} = 5$.

Assuming that the rotor is structured so that no change occurs in the rotational characteristics of the rotating electrical machine when the rotor is set in the reverse direction along the rotary shaft and that the A core 10 and the B core 20 assume structures basically identical to each other except for certain fine details thereof, the self inductances of single turn coils at the A core 10 and the B core 20 have the identical L. The individual coils at the A core 10 and the B core 20 are connected in series. Accordingly, the self-inductance $L_k$ at each coil is expressed as in (30) below.

$$L_k=L(N_{Ak}{}^2+N_{Bk}{}^2) \cdots (30)$$

By incorporating expression (25) for substitution in expression (30), an expression; $L_1 = ... = L_k = ... = L_M = LN^2$, indicating that the self inductances at all coils are equal to one another, is written. Even when the coils are wound with integral numbers of turns through rounding off, the self inductances are substantially equal to one another, although there may be a slight extent of variance. Furthermore, even when the mutual inductances are factored in, the equivalent self inductances at the individual coils are substantially equal to each other.

A six-phase coil system, in particular, may be regarded as being constituted with two three-phase coil systems. Accordingly, by combining the electric currents generated via the two three-phase coil systems, an electric current with a lesser extent of ripple can be obtained. Since the ripple in the generated electric current causes noise in the generator, a quieter generator can be achieved by adopting the present invention in the six-phase coil system.

-Fourth Embodiment-

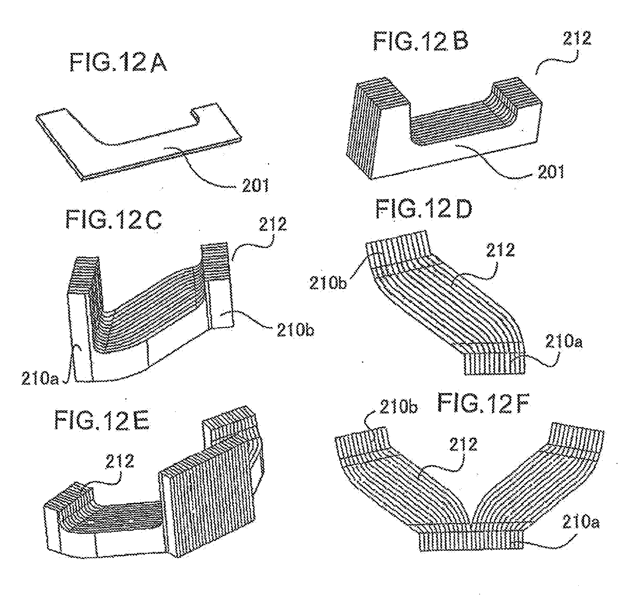

FIGS. 12A ~ 12B illustrate another embodiment of the present invention. Apart from the features described below, the embodiment is similar to the first embodiment.

In the embodiment described in detail below, the claw poles and the core backs at the A core 10 and the B core 20 in the stator unit 1 are constituted with laminated core blocks. FIG. 12A shows one of the iron sheet blank 201 used to constitute a laminated core block, which, in turn, is used to form a claw pole 212. The width of the claw, smallest at the front end, gradually increases toward the base along the axial direction and the claw achieves an R-shape at the base, since the sectional area at the base must be set greater than the sectional area at the front end to accommodate the magnetic flux flowing in from the rotor side of the claw pole 212 and traveling toward the base. FIG. 12B shows an assembly formed by layering a plurality of blanks, one of which is shown in FIG. 12A. The shapes of the blanks laminated one on top of the other are all identical. FIG. 12C shows the shape achieved by deforming the laminated blank assembly in FIG. 12B. The laminated assembly is deformed through plastic deformation such as bending by restraining the inner side along the radial direction, which subsequently forms the claw portion and the outer side along the radial direction, which subsequently forms the yoke portion. FIG. 12D presents a view of the laminated assembly 122 in FIG. 12C, taken along the direction perpendicular to the banded (layer edges) surface. The claw portion 210a and the yoke portion 210b each have a rectangular section and the area connecting the claw portion and the yoke portion is deformed through bending or the like. FIG. 12E is a view of the claw pole formed by using two laminated assemblies shown in FIG. 12C and FIG. 12D having been prepared through a bending process are coupled together at their claw portions12a. The two laminated assemblies are set symmetrically along the circumferential direction so as to abut the banded surfaces of the claw portions 12a with each other. FIG. 12F is a view of the laminated assembly in FIG. 12E taken along the direction perpendicular to the banded surfaces. The laminated assembly in the figure is obviously constituted of two laminated assemblies in FIG. 12D set symmetrically by using an area of the claw portion 210 as the plane of symmetry. The laminated assembly in FIG. 12F constitutes a single claw portion.

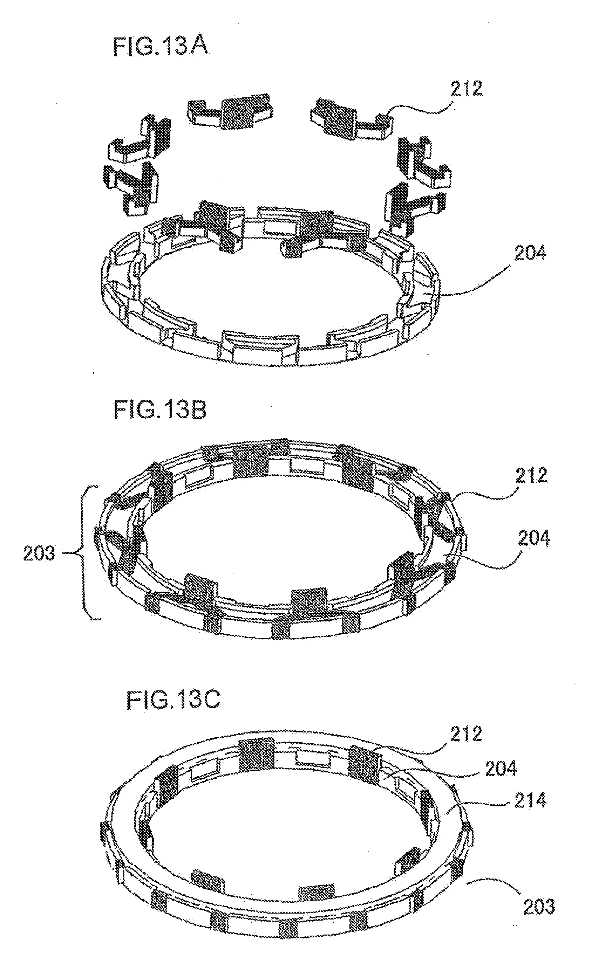

FIGS. 13A through 13C illustrate a single stage stator formed by using claw poles, one of which is shown in FIGS. 12A through 12F. FIG. 13A shows eight laminated assemblies, each used to form the claw pole 212 as described in reference to FIGS. 12A through 12F, disposed along the circumferential direction. At a holding plate 204, grooves are formed so as to position and hold the laminated assemblies accurately. As the laminated claw poles 212 are set into the grooves, they are positioned correctly, thereby forming a half stage stator 203 constituting one half of a stage stator, as shown in FIG. 13B. As shown in FIG. 13C, ring-shaped windings can be disposed at a full stage stator 207. A full stator for a given stage is formed by disposing a half stage stator 203, such as that shown in FIG. 13C and a half stage stator without any stator coil 14 (or any stator coil 24) disposed therein, such as that shown in FIG. 13B so that they face opposite each other along the axial direction.

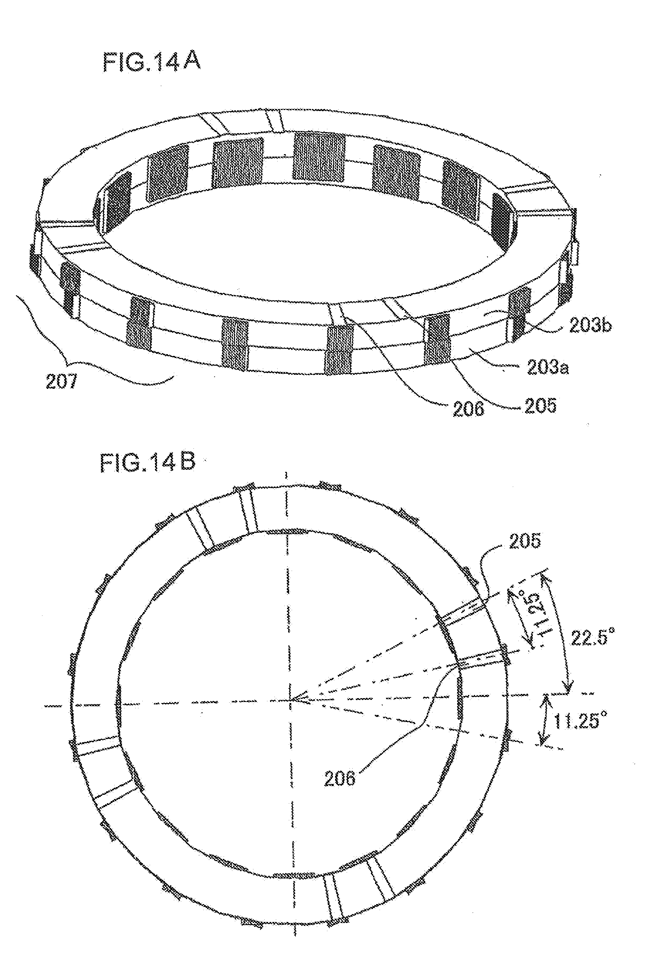

FIGS. 14A and 14B present external views of the full stage stator 207. Holding plates 204 hold the laminated assemblies constituting the claw poles 212 between them. This means that the mechanical strength of the stator is determined by the strength of the holding plates. While FIG. 14A shows a surface of a holding plate present along the axial direction, the structure assumed at the surface is now described. Sets made up of a positioning groove 206 and a positioning projection 205 having a predetermined positional relationship relative to each other are formed at least at three positions along the circumferential direction at the surface facing along the axial direction of the holding plate 204. FIG. 14B illustrates this positional relationship. The positional relationship shown in the figure is assumed in the 16-pole, two-stage three-phase motor achieved in the embodiment. As described earlier, when stacking stage stators over two stages along the axial direction to constitute a two-stage three-phase motor, the individual stage stators are disposed with an offset of 90° electrical angle (11.25° mechanical angle) relative to each other along the circumferential direction. For this reason, the groove and the corresponding projection are set at positions with an offset of 11.25° relative to each other along the circumferential direction. In addition, since a half stage stator 203a and another half stage stator 203b are connected along the axial direction, their positions must be taken into consideration. In the example, the positional relationship of the projection 205 and the groove 206 on the upper side to those on the lower side is reversed at a position forming an angle of 11.25° from the center of a claw pole, i.e., relative to a position equivalent to a quarter of the full cycle in the electrical angle and, accordingly, the positioning groove 206 is formed at a position forming an 11.25° angle relative to the center of the clawpole and the corresponding projection is formed with an offset of 11.25° relative to the positioning groove. Projection/groove pairs, each made up with the projection and the groove, are disposed over equal intervals of 90°, so as to enable accurate positioning along the circumferential direction.

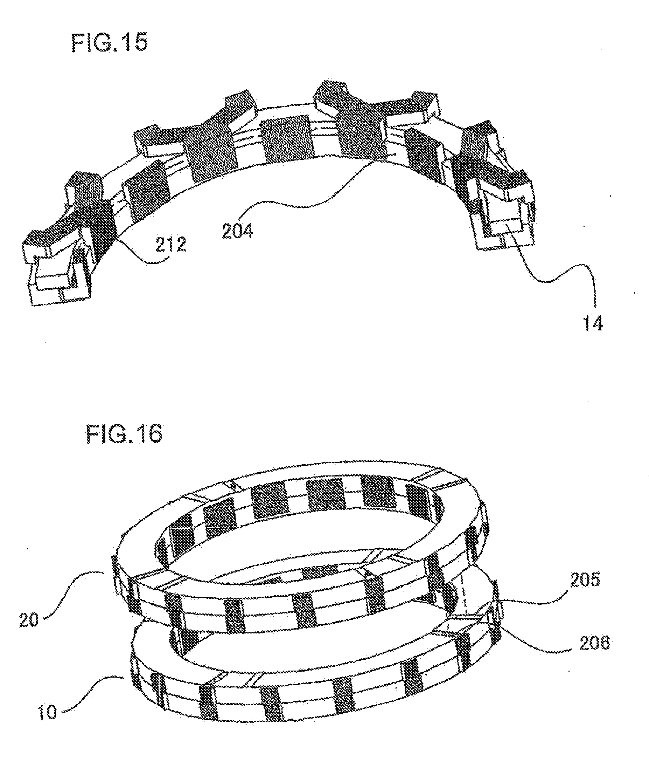

FIG. 15 shows the structure of a given holding plate 204 in a sectional view. In addition to the grooves at which the laminated core blocks to constitute the stator unit 1 are held firmly, the holding plate 204 includes guide portions used to hold the stator coil 14 (or the stator coil 24; the same principle applies hereafter). Namely, since the stator coil 14 must be disposed without contacting the core 12, the stator coil 14 is held over a distance so as to form a clearance between the core 12 and the stator coil 14. More specifically, the holding plate assumes a thickness measured along the axial direction which is greater than the thickness of the core blocks and includes a surface ranging along the circumferential direction with a diameter greater than the inner circumferential side measurement of the claw portions, but smaller than the inner diameter of the yoke portion so as to accommodate the installation of the stator coil 14. Thus, the stator coil 14 is exclusively positioned and held without contacting the core.

FIG. 16 presents an example that may be adopted when assembling the stators corresponding to the two stages. As has been described in reference to FIGS. 14A and 14B, the positional relationship between the stage stators is exclusively determined as the grooves and the projections formed at the holding plates 204 along the axial direction are interlocked. The positioning projections 205 and the positioning grooves 206 formed at the upper surface of the stage stator (A core 10) in FIG. 16 are made to fit with the positioning projections 205 and the positioning grooves 206 formed at the lower surface of a stator corresponding to another stage (B core 20). The grooves 206 are made to interlock with the projections 205 on the other side at four positions along the circumferential direction and as they interlock at these four positions, the two stage stators are assembled. Since the two stage stators are held together without allowing any displacement in either the X direction or the Y direction over a plane perpendicular to the axis, exclusive positioning is enabled. The claws at the stators exclusively positioned relative to each other as described above are offset by a 90° electrical angle measured from a claw center to the next claw center (by 11.25° of mechanical angle in the 16-pole structure in the example) as has been explained in reference to FIGS. 14A and 14B. The inner circumferential surface and the outer circumferential surface of the stator unit in the rotating electrical machine to be used as a motor or a dynamo electric generator may be machined so as to provide an optimal stator unit. With the individual stage stators positioned via the positioning projections and the positioning groove at the holdingplates, the inner circumferential surface and the outer circumferential surface are machined so as to achieve a high level of circularity by using a machining tool such as a lathe. The inner circumferential surface and the outer circumferential surface in the assembled state both initially assume an angular contour forming a polygonal shape along the circumferential direction formed by the end surfaces of the laminated assemblies. For this reason, when the rotor with a round section is disposed on the inner circumferential side, non-uniform gaps may be formed and, in such a case, the rotating electrical machine may fail to achieve a satisfactory magnetic flux distribution. Accordingly, by machining the inner circumference through trimming or grinding, the characteristics can be improved. It will be obvious, however, that the rotating electrical machine may be utilized without machining the inner circumference as long as the desired characteristics are already assured. In addition, the rotating electrical machine may be assembled by ensuring that the claw poles are disposed so as to achieve a smooth, round contour along the circumferential direction. It may also be difficult to mount a cylindrical protective component such as a housing on the outer side of the stator unit if the laminated assemblies project out over the outer circumference. Under such circumstances, the outer circumferential area, too, should be machined as described above so as to achieve a smoothly rounded contour. However, the outer circumferential area does not need to be machined if no housing is to be mounted or the projections formed with the laminated assemblies are to be used for purposes of heat discharge. The inner circumferential surface and the outer circumferential surface may both be machined so as to achieve, for instance, a diameter of $\varnothing$100 mm $\pm$ 0.01 mm on the inner circumferential side and a diameter of $\varnothing$130 mm on the outer circumferential side.

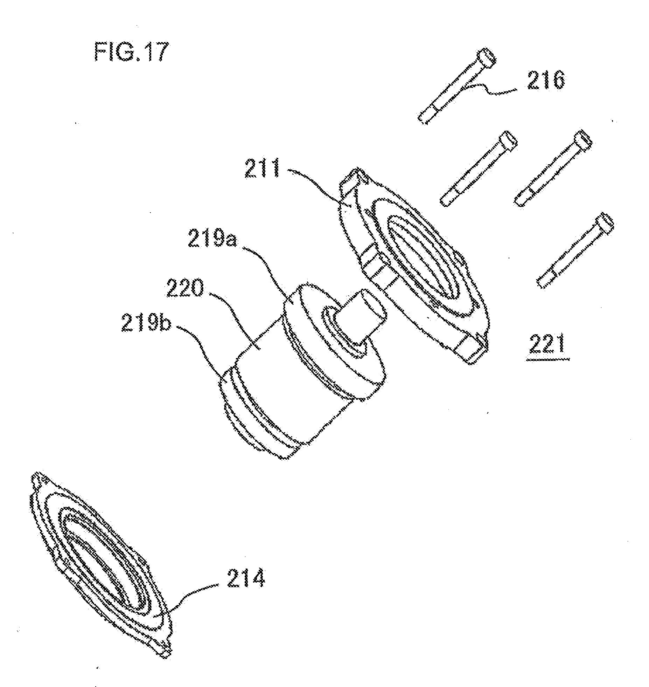

FIG. 17 shows the components to be assembled into a motor representing an example of the rotating electrical machine according to the present invention. A ring-shaped permanent magnet 220 is disposed at the rotor that includes bearings 219a and 219b and the two-stage three-phase stator unit 1 (not shown) is disposed so as to surround the stator. An output-side end bracket 211 and a rear-side end bracket 214 (a non-output shaft side bracket) are disposed as shown in the figure so as to hold the stator unit and the rotor between them and the entire assembly is fastened together along the axial direction with through bolts 216. As the components are fastened together, a complete motor 221 is produced. Since no coil ends are present along the axial direction, a lower profile is achieved along the axial direction and thus, the motor is provided as a compact unit.

While a ringmagnet is disposed at the rotor in the example presented in FIG. 17, similar advantages can be achieved by adopting the present invention in a motor or a dynamo electric generator equipped with a squirrel-cage-type conductive rotor, a rotor equipped with an embedded magnet, a salient pole-type rotor, which does not include any magnet, a reluctance-type rotor assuming varying levels of magnetic resistance or a Ludell-type rotor.

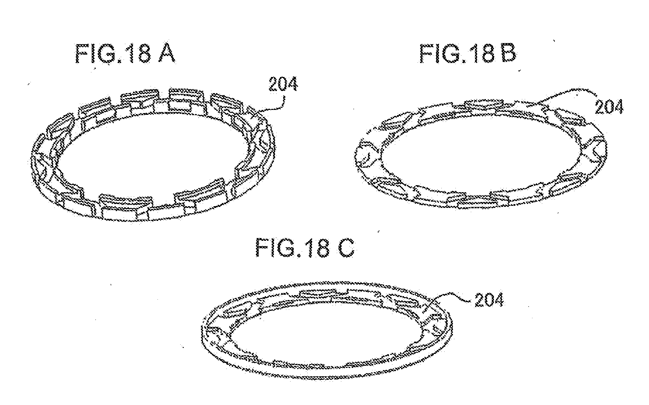

FIGS. 18A through 18C present examples of structures that may be adopted for the holding plates. By adopting a specific structure at the holding plates, the productivity and the characteristics of the motor can be improved. FIG. 18A shows one of the holding plates described in reference to the previous embodiment. It includes grooves at which laminated core blocks are held. It also includes inner circumferential side walls and outer circumferential side walls with which the coil is exclusively positioned and held. As described earlier, such holding plates must be constituted of a nonmagnetic material. In addition, the material must assure a certain level of strength in order to firmly hold the laminated core blocks. For this reason, it is desirable to form the holding plates with a nonmagnetic metal or an organic material such as resin. More specifically, they may be constituted of an aluminum alloy, a nonmagnetic stainless steel alloy or a copper alloy. Lightweight titanium may be another option, although it is not as viable from the viewpoint of its cost performance. The resin materials that may be used to form the holding plates include LCP (liquid crystal polymer), PPS (polyphenylene sulfide resin), PBT (polybutylene terephthalate resin), PET (polyethylene resin), nylon reinforced with glass fiber and PC (polycarbonate resin). Carbon fiber-reinforced resins and thermosetting resins such as epoxy resin and unsaturated polyester resin, too, are options that may be considered. It is desirable to select the optimal material in conformance to specific conditions set based upon the thermal and mechanical strength requirements of the particular motor or generator. The holding plates may be manufactured by using aluminum or copper alloy through die casting, whereas they may be manufactured by using a stainless steel alloy through machining or cold or warm casting. The holding plates may be manufactured by using a resin material through injectionmolding or the like. FIG. 18B shows a holding plate assuming the shape of a plate. The holding plate assuming this shape can be manufactured with ease through machining such as casting or press molding by using ring-shaped blanks or the like. FIG. 18C shows a holding plate that includes an outer circumferential wall that holds in the laminated assemblies. Since no laminated core blocks range beyond the wall in the assembled state, the holding plate may also function as part of a housing.

-Fifth Embodiment-

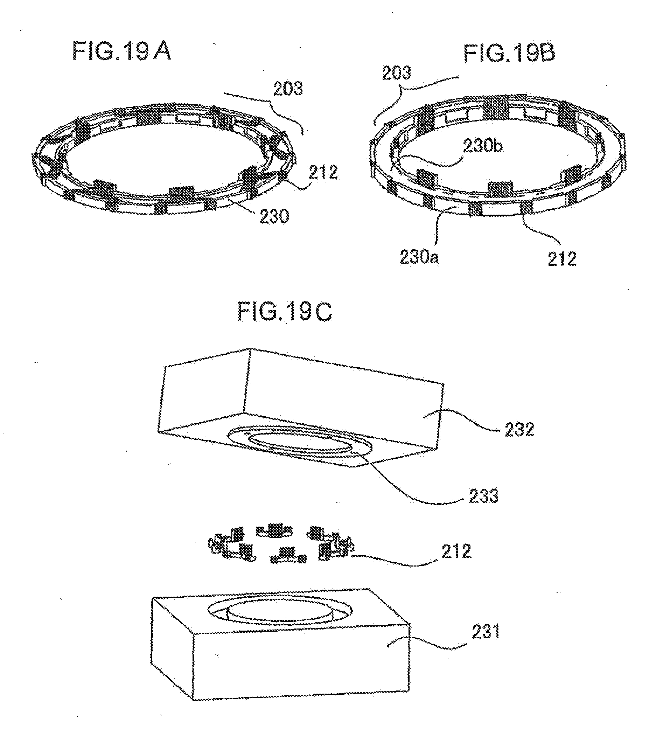

Next, another embodiment of the present invention is described in reference to FIGS. 19A ~ 19C. The embodiment is identical to the first embodiment described above except for the specific features explained below.

In the previous embodiment, the holding plates are each provided as an independent component, and are assembled as part of the stator unit. In this embodiment, however, a portion to constitute a holding plate is directly formed at a stator core block. FIGS. 19A ~ 19C each show a half stage stator 3 corresponding to a given stage. The structure of the half stage stator shown in FIG. 19A is similar to that shown in FIG. 13B. FIG. 19B shows a structure with a thin holding plate portion 230b covering the coil installation surfaces of the stator core blocks. FIG. 19C illustrates how a stator core assuming such a structure may be formed. FIG. 19C schematically illustrates a die unit. A lower die 231 to be used as a base includes a holding portion with which the laminated core blocks to constitute the claw poles on one side can be accurately positioned along the circumferential direction. The required number of claw poles (eight claw poles are disposed along the circumferential direction in this embodiment) are disposed along the circumferential direction and the claw poles set in place are clamped by using an upper die 232 that includes a gate (resin intake port) 233 formed thereat. The space formed inside the upper and lower die assumes a shape matching the shape of the holding plate, and the laminated core blocks to constitute the claw poles 212 are set at specific positions in the space assuming a shape identical to that of the holding plate. After clamping the claw poles with the dies, a resin is poured through the intake port so as to form a half stage stator through injection molding. As a result, a half stage stator 203 is formed as an integrated unit that includes the holding plate portion constituted of resin. By modifying the shape of the space formed between the dies, a half stage stator assuming the shape shown in FIG. 19B can be manufactured. This shape may be achieved by forming the holding plate portion constituted of metal through die casting, instead of the holding plate portion constituted of resin. In such a case, with a group of laminated core blocks held in dies similar to those described above, molten metal should be poured through the intake port so as to form a half stage stator 203 with its holding plate portion constituted of metal through die casting. Thematerial thatmaybeused in the die casting process may be an aluminum alloy, a zinc alloy or a copper alloy.

-Sixth Embodiment-

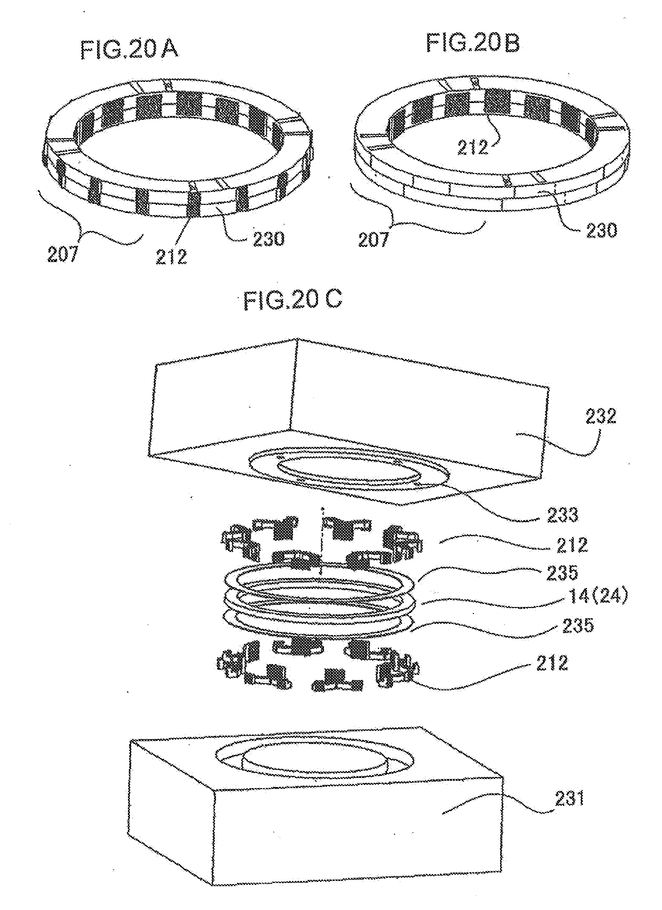

Next, another embodiment of the present invention is described in reference to FIGS. 20A ~ 20C. The embodiment is identical to the first embodiment described above except for the specific features explained below.

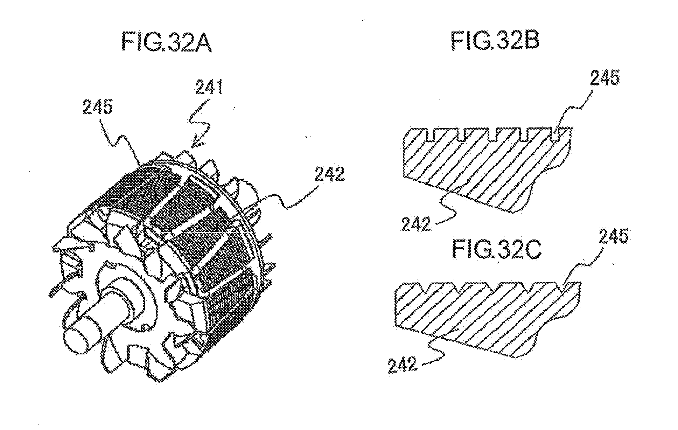

In reference to the sixth embodiment, another method that may be adopted when manufacturing a stage stator 207 is described. FIGS. 20A ~ 20C each show a stage stator similar to that shown in FIG. 14A. FIG. 20A shows a structure similar to that shown in FIGS. 14A and 14B. While a holding plate portion 330 is present around the laminated core blocks in the structure shown in FIG. 20B as in the structure shown in FIG. 20A, the holding plate portion 330 in FIG. 32B covers the outer circumferential-side surface of the stator. While the laminated core blocks are assembled on a holding plate prepared in advance as a separate component in order to achieve the target shape, an integrated stator is obtained by using injection molding dies in the embodiment, as in the fifth embodiment. FIG. 20C schematically illustrates how such an integrated stator may be manufactured.

A lower die 231 used as the base includes a holding portion with which the laminated core blocks to constitute the claw poles on one side can be positioned accurately along the circumferential direction. The necessary number of claw poles 212 (eight claw poles are disposed along the circumferential direction in the embodiment) are disposed along the circumferential direction, a ring-shaped stator coil 14 (stator coil 24) is disposed atop the surfaces of the claw poles ranging axially via an insulating sheet 235 constituted of a thin insulating film, and the core blocks to constitute the claw poles 212 to assume the opposite polarity are positioned and assembled via an insulating sheet 235. These components set in place are clamped by using an upper die 232 that includes a gate (resin intake port) formed thereat. The space formed inside the upper and lower dies assumes a shape matching the shape of the holding plate, and the components such as the laminated core blocks to constitute the claw poles 212 and the coil are set at specific positions in the space assuming a shape identical to that of the holding plate 4. After clamping the claw poles with the dies, a resin is poured through the intake port so as to form a single stage stator 207 as an integrated unit that includes as an integrated part thereof a holding plate portion 230 constituted of resin. By modifying the shape of the space formed between the dies, a stage stator assuming the shape shown in FIG. 20B can be manufactured. Through this method, the laminated core blocks and the coil are locked onto the holding plate portion 230 without any gap formed between them, assuring improved strength, thereby allowing the stator to better withstand vibrations and the like. In addition, since the components are positioned as they are firmly held in the dies, the positional accuracy improves as well. Among those listed in the description of the fifth embodiment as materials that may be used to form the holding plates, the metal die casting materials cannot be utilized in the method in the embodiment, since the insulating film on the coil, which is cast together as an integrated part, would become damaged by the heat during the forming process. However, the method achieved in the embodiment may be adopted in conjunction with resin materials such as LCP (liquid crystal polymer), PPS (polyphenylene sulfide resin), PBT (polybutylene terephthalate resin), PET (polyethylene resin), nylon reinforced with glass fiber and PC (polycarbonate resin). Carbon fiber-reinforced resins and thermosetting resins such as epoxy resin and unsaturated polyester resin are also options that may be considered. It is desirable to select the optimal material by factoring the specific conditions set based upon the thermal and mechanical strength requirements of the particular motor or generator.

-Seventh Embodiment-

Next, a method that may be adopted in order to improve the characteristics of a motor is described. The embodiment is similar to the previous embodiments except for the specific features detailed below.

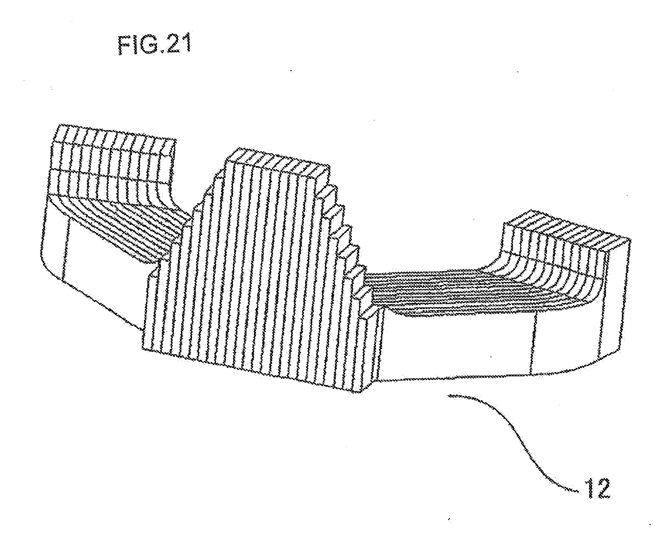

The claw poles at a claw pole motor normally assume a crested shape tapering toward the claw front end. Such a shape maybe formed by punching individual metal sheets or individual groups of sheets in different shapes and stacking them one on top of another. FIG. 21 shows a claw pole formed through such a method. Blanks such as that shown in FIG. 12A are obtained through punching by adjusting the height over the area to form the claw pole in correspondence to each blank, and then the blanks are laminated to form a laminated core block so as to achieve the shape shown in the figure. The taper angle at the claw is determined in relation to the number of poles.

-Eighth Embodiment-

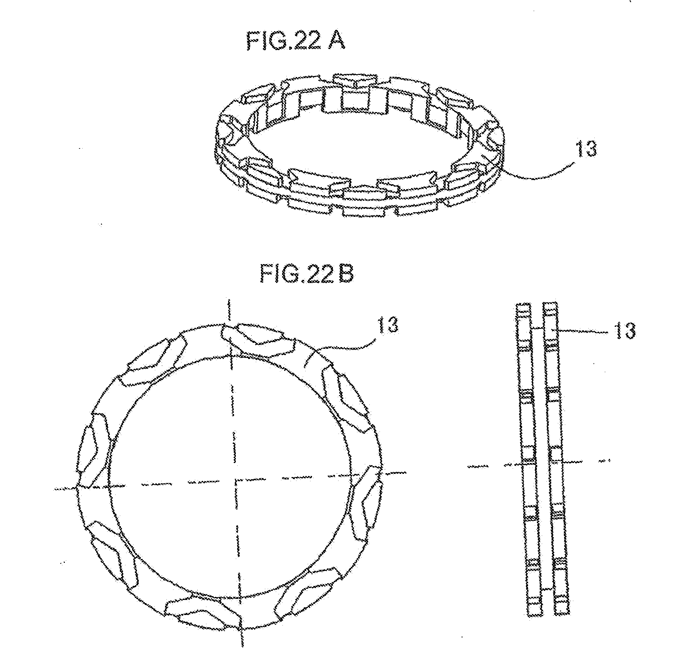

FIGS. 22A and 22B illustrate an embodiment achieved by adjusting the relationship among the holding plate, the laminated core blocks and the coil. The embodiment is similar to the previous embodiments except for the specific features detailed below.

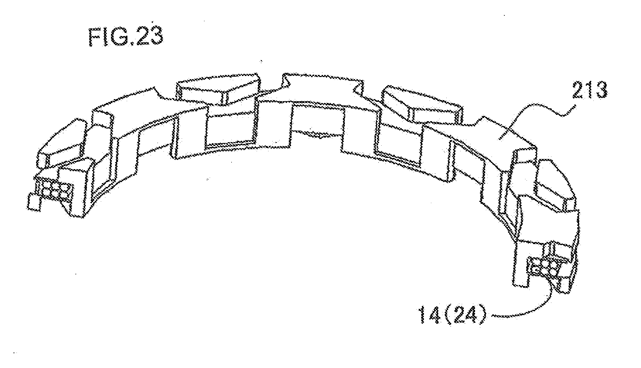

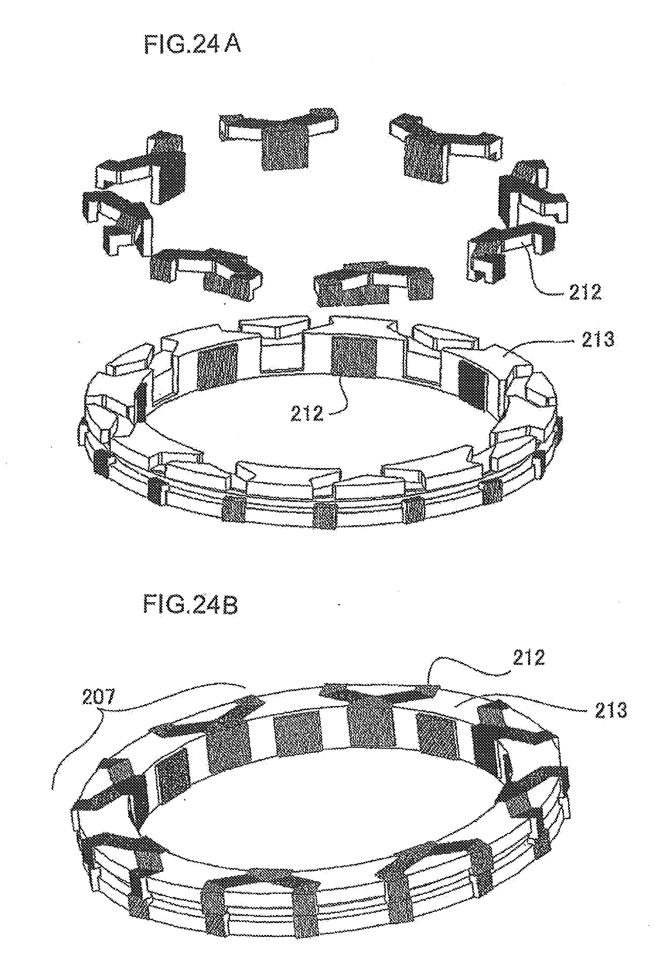

FIG. 22A is a perspective of a winding bobbin 213, which functions as a holding plate to hold the coil. FIG. 22B presents a front view and a side elevation of the bobbin shown in FIG. 22A. As do the holding plate 4 shown in FIGS. 18A through 18C, the winding bobbin 213 includes grooves at which the laminated core blocks are held, as is clearly indicated in the front view. The grooves used to hold the laminated core blocks are formed both at the front surface and at the rear surface of the winding bobbin. In addition, the grooves formed at the front surface to hold the laminated core blocks and the grooves formed at the rear surface to hold the laminated core blocks are offset relative to each other by a predetermined angle along the circumferential direction. The bobbin also includes grooves through which a ring-shaped winding is wound, as shown in the side elevation and the perspective. FIG. 23 shows the winding bobbin 213 in a sectional view, so as to better show the ring-shaped stator coil 14 (24) wound around the bobbin. Inside the bobbin, the ring-shaped stator coil formed by winding a conductor with a round section is installed. FIG. 24A shows how the bobbin is combined with the laminated core blocks. The laminated core blocks are each set in the holding groove formed at the winding bobbin 213 and, as a result, the individual laminated core blocks are held securely along the circumference. FIG. 24B shows the assembled unit. Theassembled unit ultimately obtained as described above is a single stage stator similar to that shown in FIG. 14D. By adopting the embodiment, the winding can be held with ease and the coil can also be insulated from the stator core with ease.

-Ninth Embodiment-

A specific manufacturing method that may be adopted to manufacture laminated core blocks to constitute claw poles is now described in reference to the ninth embodiment. The embodiment is similar to the previous embodiments except for the specific features detailed below.

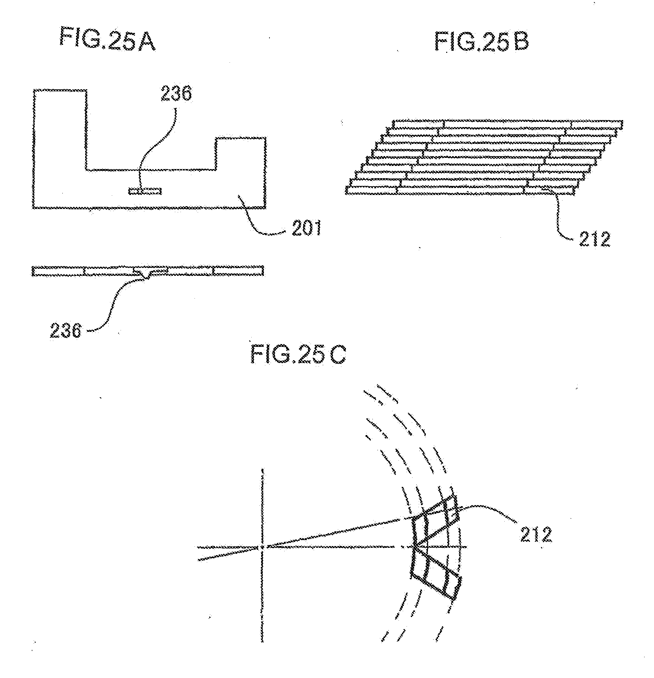

FIGS. 25A through 25C present an example of a structure that may be adopted in order to obtain laminated core blocks with ease. FIG. 25A shows one of the blanks to be used to form a core, similar to that shown in FIG. 12A. Over a central area of the blank, a half blank groove 236a/projection 236b, to be used for purposes of caulking, is formed. FIG. 25B shows an assembly formed by laminating such blanks with an offset. The presence of the groove /projection in FIG. 25A allows blanks to be layered even when they need to be slightly offset relative to each other. In other words, laminated core blocks such as that shown in FIG. 25B with the individual blanks fixed firmly one over another, can be obtained with ease through caulking. FIG. 25C illustrates a specific position at which a laminated core block is installed along the circumferential direction in a view taken along the axial direction. The claw pole, the shape of which is indicated by the parallelograms in the figure, is identical in shape to that in FIG. 25B. This means that the claw pole in the embodiment can be formed without the bending process shown in FIG. 12A ~ 12F in order to achieve the shape shown in FIG. 12C. Namely, the claw poles in the embodiment can be formed with ease by using laminated core blocks formed as shown in FIG. 25B.

-Tenth Embodiment-

Other methods that may be adopted to obtain claw poles are now described. The 10th embodiment is similar to the previous embodiments except for the specific features detailed below.

The laminated core blocks used to form the claw poles in the embodiment are each constituted with a core laminated along the circumferential direction over the claw area.

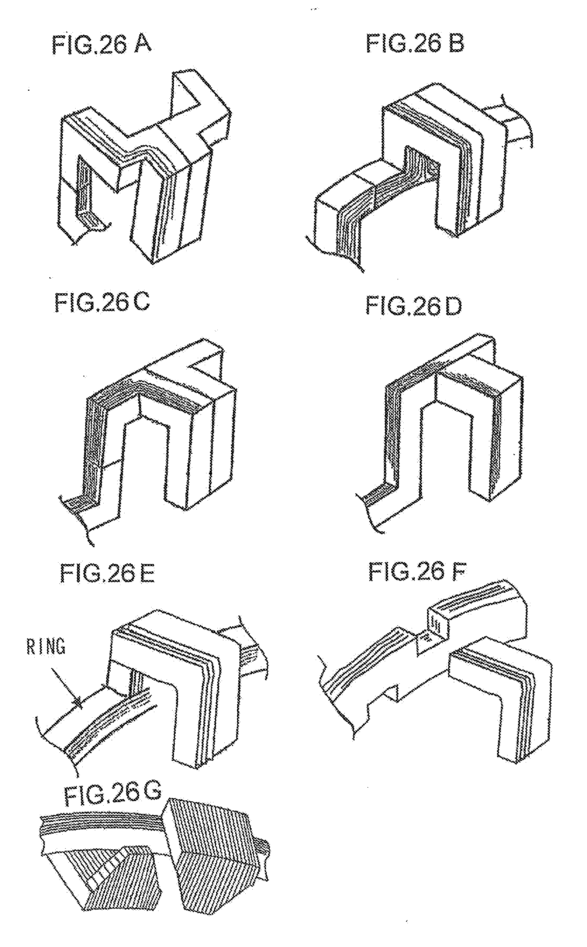

FIGS. 26A ~ 26G each illustrate a structural example that includes claw poles constituted with laminated core blocks and a yoke portion constituted with a separate ring. FIG. 26A shows an example in which a claw pole and a yoke are formed through right-angle bending instead of curved bending such as that shown in FIG. 12C. In the example presented in FIG. 26B, too, a laminated blank assembly is bent at a right angle. The example presented in FIG. 26B is **characterized in that** the direction along which the sheets are layered over the outer circumferential area of the yoke portion changes to extend along the axial direction instead of the circumferential direction through the bending process. FIG. 26C presents an example of a variation of FIG. 26A in which the laminated blank assembly is bent at a right angle at one position instead of two positions. In the example presented in FIG. 26D, which is a variation of FIG. 26C, the claw portion of the claw pole is constituted with an unbent laminated assembly. A circumferential portion to constitute the yoke is formed separately from the claw portion. While the structure shown in FIG. 26E is substantially identical in its shape to that shown in FIG. 26B, the claw portion and the yoke ring are formed separately. FIGS. 26F and 26G each illustrate a structure in which the eddy current loss occurring as the magnetic flux originating from the claw portion flows into the ring portion is reduced by altering the layering direction along which the blanks are laminated at the ring portion in FIG. 26E, i.e., by switching the layering direction from the axial direction to the radial direction. In the example presented in FIG. 26F, the claw portion is inserted at a groove formed at the ring portion. In the example presented in FIG. 26G, the claw portion is set in contact with a side surface (banded surface) of the ring portion formed by laminating blanks.

-Eleventh Embodiment-

Methods that may be adopted to fix laminated core blocks are now described in reference to the 11th embodiment. The embodiment is similar to the previous embodiments except for the specific features detailed below.

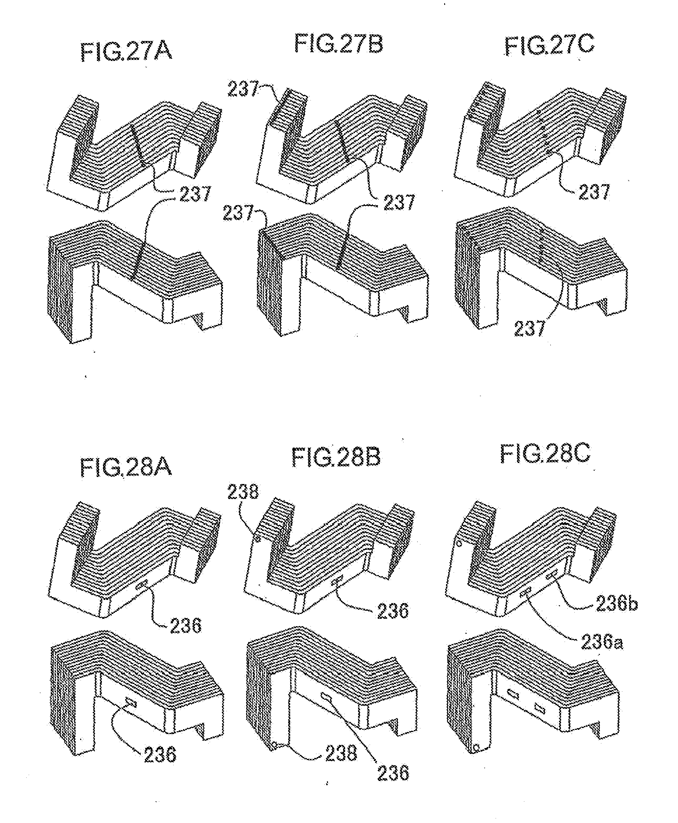

FIGS. 27A through 27C each show a method whereby laminated core blocks are fixed together through welding. In the example presented in FIG. 27A, the portion of the laminated core block where the coil is to be held is welded over the trunk area. Magnetic fluxes originating from the rotor in a claw pole motor equipped with the claw poles in the embodiment flow in through the claw pole surfaces and, for this reason, welding the laminated assemblies may result in an increase in the extent of loss such as the eddy current loss. This means that the laminated assemblies each need to be welded at the optimal location. It is not advisable to weld the laminated assembly over the surface to face opposite the rotor, through which the magnetic flux is to flow in. It is not advisable to weld the laminated assembly over the abutting surface at the yoke portion, at which the laminated core block is to be abutted with another laminated core block to assume the opposite polarity. In other words, no significant problem should arise as long as the laminated assembly is welded at positions other than these. FIG. 27B presents an example in which the laminated core block is welded over its trunk area where the coil is held, the front end of the claw portion and the lower surface of the base area. By welding the laminated block at these positions, vibration of the rotating electrical machine, caused by the magnetic attraction it is bound to be subjected to at its magnetic flux inflow surface, is effectively prevented and thus no significant noise occurs. In the example presented in FIG. 27C, the laminated assembly is welded at positions similar to those shown in FIG. 27B. However, the welding positions are offset from one another at the front surface and the rear surface of each blank, so as to minimize the adverse effect of any eddy current that may occur.

FIGS. 28A through 28C each present an example in which the laminated core block is fastened through caulking. In the example presented in FIG. 28A, a V caulk is formed at the center of the core trunk. When the laminated core block is fastened at this position, hardly any increase in the eddy current occurs. FIG. 28B presents an example in which a caulk is formed at the front end of the claw pole in order to reduce vibration and noise, based upon a rationale similar to that of the example presented in FIG. 27B. While there may be a concern that this structure may lead to a slight increase in the occurrence of eddy currents, countermeasures such as those shown in FIG. 28C against eddy currents may be taken to reduce eddy currents, e.g., by caulking every other blank over the trunk area.

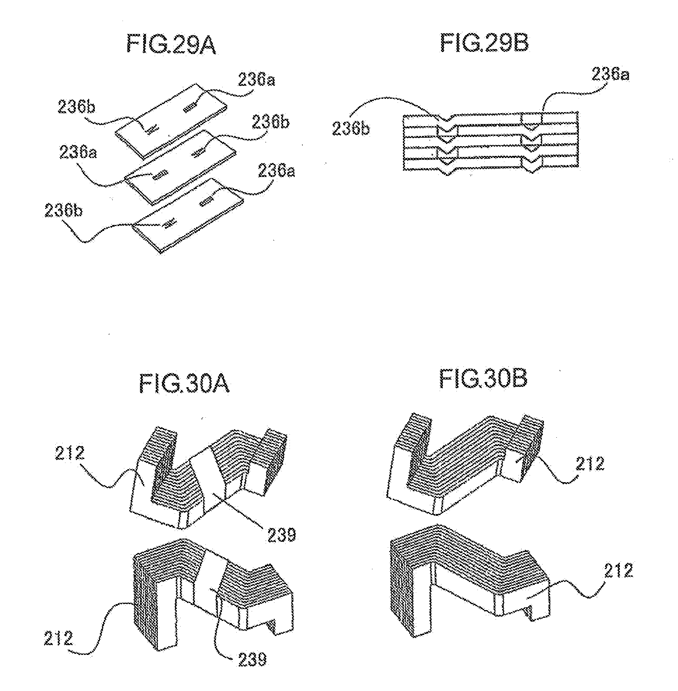

FIGS. 29A and 29B illustrate a method that may be adopted when connecting caulks at every other blank. FIG. 29A is a perspective illustrating the principle of the method. Blanks, each having a groove 236a and a projection 236b formed therein at specific positions, are disposed so that the grooves 36a and the projections 36b are set alternately to each other along the layering direction to allow a projection to be fitted in a groove at each connecting area. FIG. 29B shows the caulking areas in a sectional view. The blanks are alternately connected through the caulking portions on the left-hand side in the figure and through the caulking portions on the right-hand side in the figure in a reiterated pattern so that every other blank in the laminated assembly is connected on the same side.

FIGS. 30A and 30B each show another fastening method. FIG. 30A shows a fastening method in which a laminated assembly is fastened together with a tape or the like. As an alternative, the laminated assembly may be fastened together via an adhesive or the like, and in such a case, the external appearance of the fastened laminated assembly is no different from the appearance of the individual blanks layered one on top of another, as shown in FIG. 30B.

The thickness of the ferromagnetic material constituting electromagnetic steel sheets used to form the laminated core blocks may be set to 0.2 mm ~ 0.5 mm. In addition, while the use of even thinner electromagnetic steel sheets or the like will require a greater number of processing steps, a sheet thickness smaller than 0.2 mm ~ 0.5 mm is advantageous in that it minimizes the core loss. In some cases, an amorphous ribbon with a thickness of 0.025 mm may be used as the material for the laminated core blocks. Furthermore, while the laminated core blocks achieving the desired shape may be formed through press-punching, they may instead be formed through a chemical method such as etching, or any alternative method such as laser cutting or waterjet cutting. A plurality of blanks formed through any of these methods are layered and fastened together, as shown in any of FIGS. 29A, 29B, 30A and 30B.

-Twelfth Embodiment-

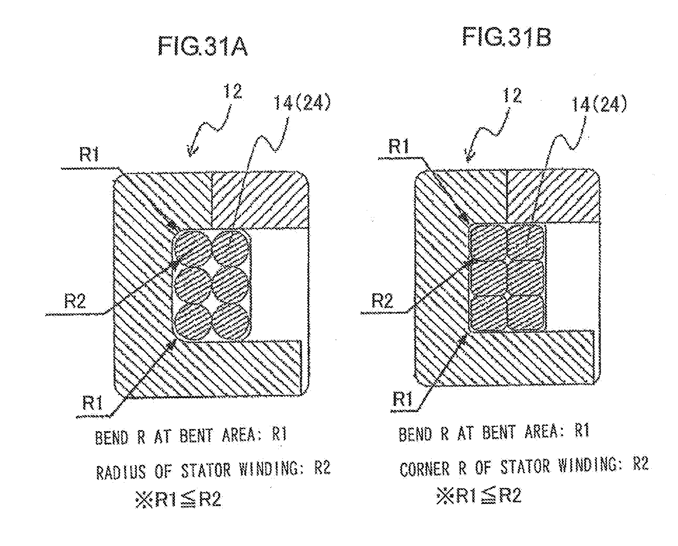

In reference to FIGS. 31A and 31B, another embodiment of the present invention is described. The embodiment is similar to the previous embodiments except for the specific features detailed below.

FIGS. 31A and 31B each present a sectional view of a stator achieved in the embodiment, taken over a side surface thereof, with FIG. 31A presenting one example and FIG. 31B presenting another example. It is to be noted that the same terms and reference numerals are assigned to components identical to those in the other embodiments.

In the example presented in FIG. 31A, the radius R1 of the inner surface of the laminated core block formed with blanks assuming a specific shape, is set equal to or less than the radius R2 of the section of the ring-shaped stator coil 14 (24). The structure shown in FIG. 31A minimizes the gap formed between the stator core and the ring-shaped stator coil 14 (24) so as to improve the space factor required for installation of the coil.

In the example presented in FIG. 31B, the stator coil 14 (24) is constituted with a flat wire having a substantially rectangular section. While a flat wire is normally used in order to improve the space factor, i.e., in order to install the coil by efficiently utilizing the available installation space inside the stator core constituted with the laminated core blocks, the space factor can be further improved by setting the radius R1 at the R-shaped area of the coil placement surface equal to or less than the radius R2 at the corner R of the flat wire as in the embodiment.

-Thirteenth Embodiment-

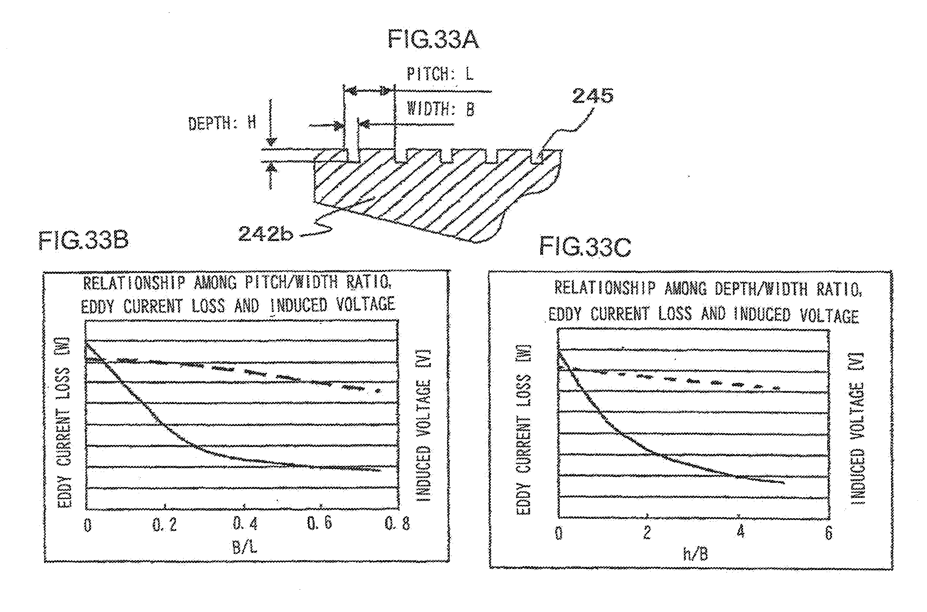

In reference to FIGS. 32A through 32C and 33A through 33C, another embodiment of the present invention is described. The embodiment is similar to the previous embodiments except for the specific features detailed below.

FIG. 32A is a perspective of a rotor achieved in the embodiment. FIGS. 32B and 32C each illustrate a specific shape that may be adopted in grooves formed at a rotor claw pole in a sectional view taken along the axial direction. FIG. 33A shows the rotor claw pole in a sectional view taken along the axial direction. FIG. 33B presents a graph indicating the relationship of the groove pitch/width ratio to the eddy current loss and the induced voltage. FIG. 33C presents a graph indicating the relationship of the groove depth/width ratio to the eddy current loss and the induced voltage. It is to be noted that the same terms and reference numerals are assigned components identical to those in the other embodiments.

As explained earlier, while the occurrence of eddy currents at the stator core 201 may be inhibited by laminating blanks along the circumferential direction, eddy currents also occur at rotor claw poles 242. Since the claws at the rotor are constituted of a magnetic metal such as iron, eddy currents flow by circling around the outer surfaces of the rotor claw poles 242. In the embodiment, a plurality of grooves 245 extending along the circumferential direction are formed with substantially equal intervals along the axial direction at the outer surface of each rotor claw pole 242, as shown in FIG. 32A. The presence of the plurality of grooves 245 formed at the outer surface of the rotor claw pole 242, as described above, increases the electrical resistance, which, in turn, inhibits flows of eddy currents.

FIGS. 32B and 32C show grooves assuming different shapes through their sections. The grooves 245 shown in FIG. 32B assume a substantially quadrangular section, whereas the grooves 245 shown in FIG. 32B assume a substantially triangular section. In other words, the section of the grooves 245 may assume any of various shapes.

Next, in reference to FIGS. 33A through 33C, the relationship of the groove depth, the groove width and the groove pitch to the eddy current loss and the induced voltage is explained. In FIG. 33A, h represents the groove depth, B represents the groove width and L represents the groove pitch. The relationship of the ratio B/L to the eddy current loss and the induced voltage is shown in FIG. 33B. As shown in FIG. 33B, the slope of the eddy current loss is less acute over a B/L range of approximately 0.2 and greater. In other words, the extent of the eddy current loss does not decrease drastically over this range. FIG. 33B also indicates that the level of the induced voltage decreases to a significant extent over a B/L range of approximately 0.3 and greater. In practical application, the B/L ratio should be set within a range of 0.1 through 0. 6 to assure both a viable extent of eddy current loss and a viable level of induced voltage. It is even more desirable to set the B/L ratio to 0.2 through 0.3 in consideration of the factors discussed above.

FIG. 33C shows the relationship of the ratio h/B to the eddy current loss and the induced voltage. FIG. 33C indicates that the slope of the eddy current loss is less acute in an h/B range of 2 and greater. In other words, the extent of the decrease in the eddy current loss is less significant over this range. In addition, the induced voltage becomes lower as h/B assumes a greater value. In practical application, the h/B ratio should be set within a range of 2 through 5 to assure both a viable extent of eddy current loss and a viable level of induced voltage. It is even more desirable to set the h/B ratio to 2 through 3 in consideration of the factors discussed above.

-Fourteenth Embodiment-

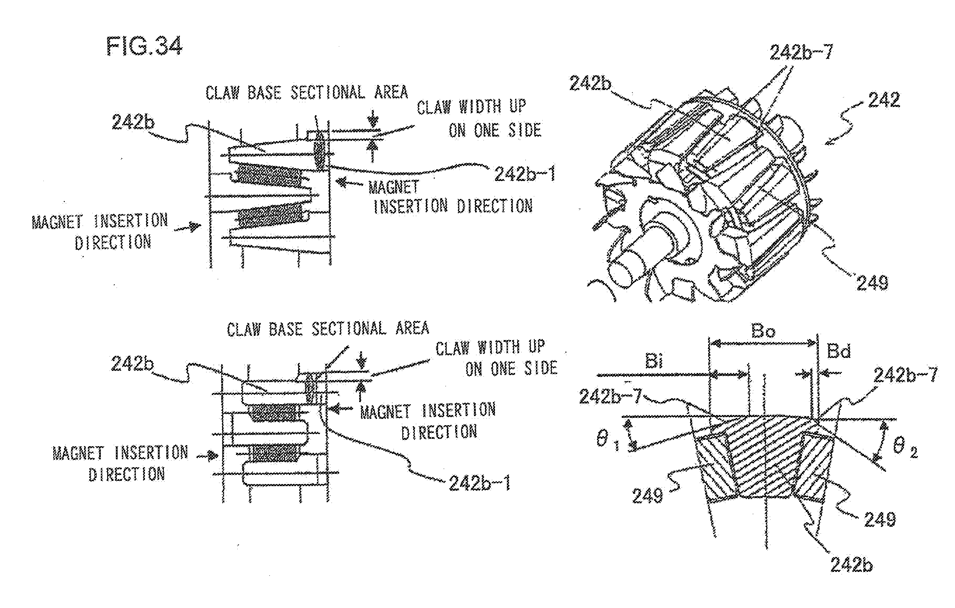

In reference to FIG. 34, another embodiment of the present invention is described. The embodiment is similar to the previous embodiments except for the specific features detailed below.

FIG. 30A is a side elevation of the rotor achieved as a first example of the embodiment, whereas FIG. 30C is a side elevation of the rotor achieved as another example of the embodiment. FIG. 30C is a perspective of the rotor achieved as the first example of the embodiment. FIG. 30D is a sectional view of a rotor claw pole in FIG. 30A. It is to be noted that the same terms and reference numerals are assigned to components identical to those in the other embodiments. The rotor claw poles 42b in the previous embodiments assume a tapered shape with the width thereof gradually reduced toward the front ends, so as to achieve symmetry along the circumferential direction. Since magnetic saturation occurs readily over a base portion at each rotor claw pole 42b, a sectional area as large as possible should be assured over the base portion located at one end of the rotor claw pole along the axial direction. However, if the base portion is widened on both sides, the gap between the adjacent rotor claw poles 42b become too narrow to allow a rotor magnet (permanent magnet) 49 to be inserted therein with ease. Accordingly, only the area of the base portion at the rotor claw pole 42, ranging on the side opposite from the rotating direction, where magnetic flux flows in a significant quantity, is widened along the circumferential direction to forma sufficient area through which magnetic flux can pass with ease. By widening only one side of the base portion along the circumferential direction, it is ensured that the rotor magnet (permanent magnet) 49 can be inserted with ease from the side along the axial direction on which the width of the base portion is not increased as illustrated in FIG. 30A.

It is to be noted that the technical concept of widening the base portion of the rotor claw pole 42 only on the side along the direction opposite from the rotating direction may also be adopted in a rotor claw poles 42 such as those shown in FIG. 30B formed so as to sustain a substantially uniform width along the axial direction. At the rotor assuming this structure, the rotor magnet (permanent magnet) 49 can be installed with ease while assuring a sufficient sectional area through which magnetic fluxes flow.

Furthermore, it is desirable to form a beveled area 42b-7 at the two edges of each rotor claw pole 42b along the circumferential direction. FIGS. 30B and 30C show rotor claw poles 42b with beveled areas 42b-7 formed therein. As these figures clearly indicate, the width Bi of the beveled area located on the side along the direction opposite from the rotating direction, i.e., on the side where the base portion assumes a greater width, is set greater than the width Bd of the beveled area located on the side along the direction in which the rotor rotates at rotor claw pole 42. Furthermore, the bevel angle $\theta 1$ on the side opposite from the rotating direction is set smaller than the bevel angle $\theta 2$ assumed on the side along the direction in which the rotor rotates at the rotor claw pole 42, as shown in FIG. 30B. It is to be noted that the ratio Bd/Bo with Bo representing the width of the rotor claw pole 42b measured along the circumferential direction should be set within a range of 0.03 through 0.3 and that the ratio Bi/Bo should be set within a range of 0.2 through 0.55. In addition, it is desirable to set the bevel angle $\theta 1$ within a range of $6° \sim 25°$, whereas the bevel angle $\theta 2$ should be set in a range of $6° \sim 45°$.

The presence of these beveled areas 42b-7 assures a smoother magnetic fluctuation to manifest between the stator claw poles 42b, which, in turn, allows the level of magnetic noise to be reduced. It is to be noted that since the bevel width on the side opposite from the rotating direction is increased at the rotor claw poles 42b in the embodiment, the magnetic noise can be reduced by averaging the magnetic flux density distribution at the rotor claw pole surfaces and thus disallowing any reduction in the output attributable to the magnetic flux loss. In addition, while displacement of the rotor magnets (permanent magnets) 249 along the radial direction is disallowed via collars ranging on the sides of the rotor claw poles 42b at their edges along the circumferential direction, these collars should assume a width of $0.8 \sim 4$ mm along the circumferential direction in order to achieve the optimal balance assuring both a lowered extent of magnetic flux leakage through the space between the rotor claw poles 42b and maximized strength. In addition, the thickness measured along the radial direction should be set within a range of 0.8 - 3 mm in order to assure a satisfactory level of mechanical strength.

-Fifteenth Embodiment-

The structure of a stator core installed in the claw pole rotating electrical machine achieved as another embodiment of the present invention is now described. In the structure achieved in the embodiment, the magnetic material has only the absolute minimum presence in the magnetic circuit. More specifically, claw poles 212a and 212b constituting the claw pole motor are formed by using laminated metal sheets such as electromagnetic steel sheets, cold-rolled steel sheets or electromagnetic stainless steel sheets. The metal sheets are laminated one on top of another along a specific direction running parallel to the direction in which magnetic fluxes originating from the rotor flow in. Namely, the magnetic poles are formed by laminating metal sheets, i.e., magnetic sheets, along the circumference of the stator unit. The metal sheets set next to each other along the circumferential direction remain uncoupled with each other either electrically or magnetically (the metal sheets are laminated with a nonmagnetic and nonconductive material inserted between them). Each claw pole constituted with a laminated core block. The laminated core block constituting a given claw pole should be set so as to face opposite the laminated core block used to form the next claw pole, which is to assume the opposite polarity along the axial direction over the outer area along the circumference.

A yoke portion 251 formed in a ring shape is disposed in the gap created between the laminated core blocks forming the two poles along the axial direction. The ring-shaped yoke portion 251 is formed by layering metal sheets along the radial direction. In the gaps enclosed by the laminated core blocks to assume two polarities and the ring-shaped yoke portion 251, a stator coil 14 (24) formed by winding a multiple times a ring-shaped conductor is disposed. The coil is held firmly along the axis of the stator between the claw poles 212a each constituted with a laminated core block and the claw poles 212b each constituted with a laminated core block and set alternately with the claw poles 212a to assume the opposite polarity.

Each stage stator in the rotating electrical machine is configured by forming a plurality (ten magnetic claw pole pairs in this example) of pole pairs, each pair made up with a claw pole 212a formed with a laminated core block and a claw pole 212b formed with a laminated core circuit and assuming the opposite polarity, along the circumferences of the coil 20 and the ring-shaped yoke portion 251. By disposing a plurality of such stage stators (two stators in the first embodiment described earlier) along the axial direction, a two-stage three-phase rotating electrical machine is formed.

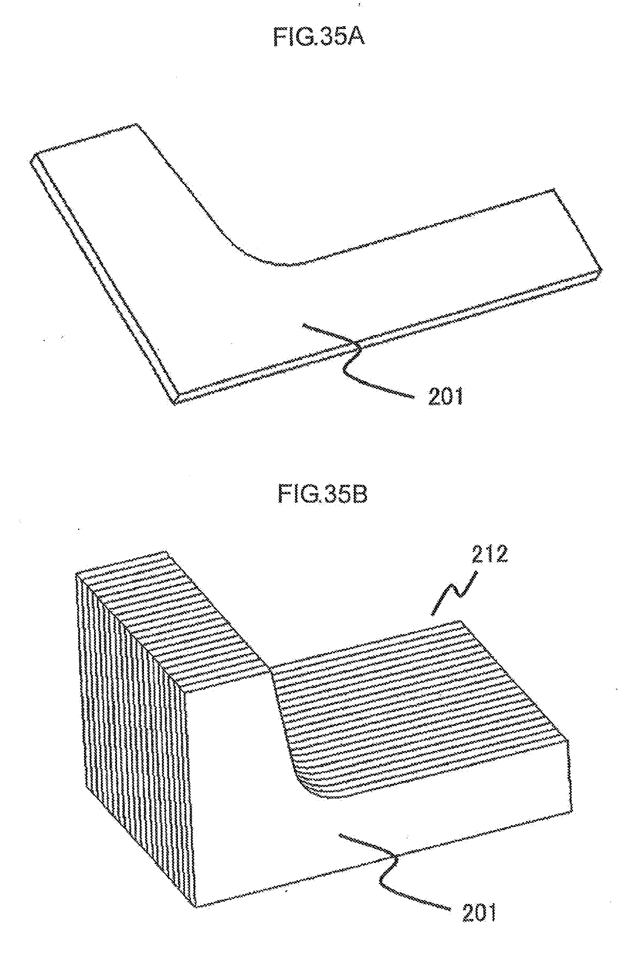

FIGS. 35A and 35B show in detail the structure of a laminated core block used to form a claw pole in the embodiment. FIG. 35A shows one of the metal sheet blanks to constitute the laminated core block which is used to form a claw pole. The width of the claw, smallest at the front end, gradually increases toward the base along the axial direction and the claw achieves an R-shape at the base, since the sectional area at the base must be set greater than the sectional area at the front end to accommodate the magnetic flux flowing in from the rotor side of the claw pole and traveling toward the base. FIG. 35B shows a laminated assembly formed by layering a plurality of blanks, one of which is shown in FIG. 35A. The assembly is formed by layering, one on top of another, blanks formed in identical shapes. This laminated core block forms a single claw.

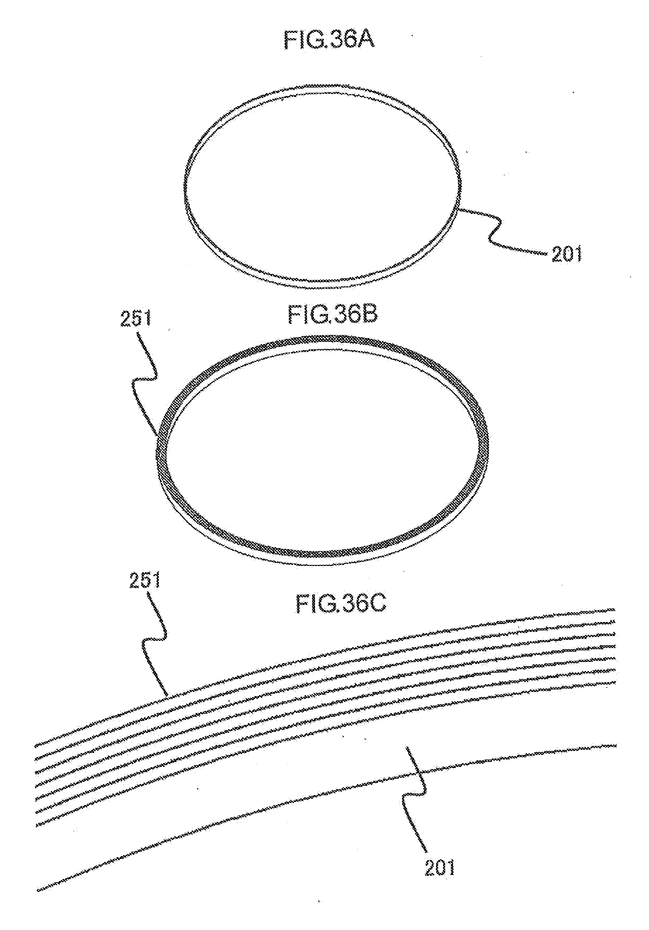

FIGS. 36A through 36C show in detail the structure of the ring-shaped yoke portion 251 achieved in the embodiment. FIG. 36A shows a metal sheet used to form the ring-shaped yoke portion 251. The metal sheet is constituted with a rectangular metal sheet rolled into a ring shape. FIG. 36B shows a laminated assembly formed by layering a plurality of metal sheets similar in shape to the metal sheet shown in FIG. 36A. The metal sheets are layered along the direction along which the radius of the ring shape extends. FIG. 36C shows the laminated structure in an enlarged view. The yoke portion 251 is constituted with this laminated assembly.

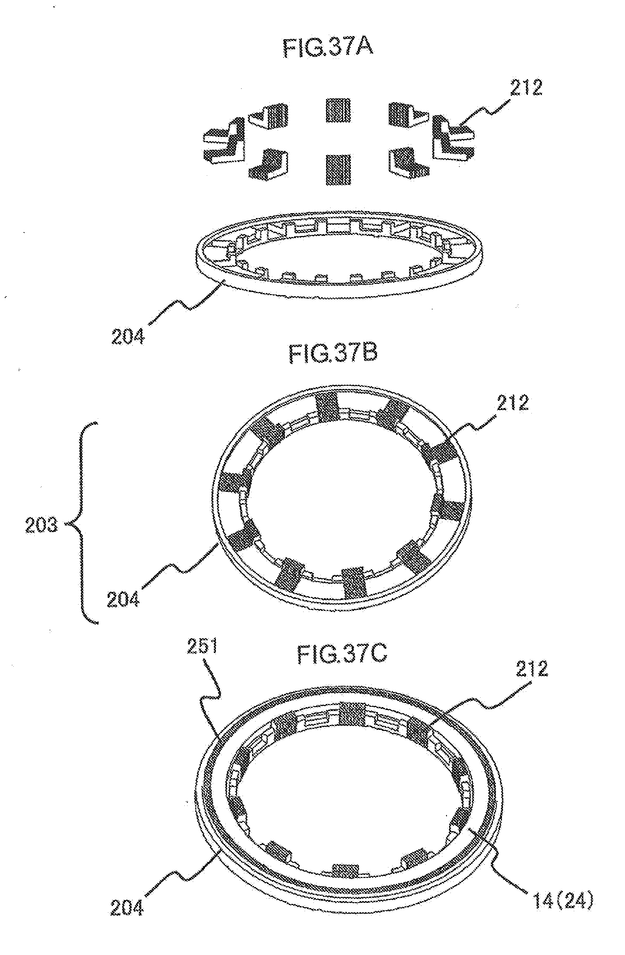

FIGS. 37A through 37C illustrate how a stage stator corresponding to a given stage may be obtained by setting the claws shown in FIGS. 35A and 35B and the yoke portion in FIGS. 36A through 36C in a specific positional arrangement. FIG. 37A shows ten laminated assemblies each to constitute a claw pole 12 as shown in FIGS. 35A and 35B set along the circumferential direction. A holding plate 204 includes grooves formed therein, via which the individual laminated assemblies are positioned and held with a high level of accuracy. By setting the claw poles 212 constituted with the laminated assemblies at the grooves, a half stage stator corresponding to a single stage, constituting one side of the phase stator, is formed as shown in FIG. 37B. The ring-shaped yoke portion shown in FIGS. 36A through 36C and the ring-shaped winding are mounted at the full stage stator 207, as shown in FIG. 37C. Then, in the state illustrated in FIG. 37C, by disposing two half phase stators, such as that shown in FIG. 37B is disposed so as to face opposite the first half stage stator along the axial direction, and a stage stator is thus formed.

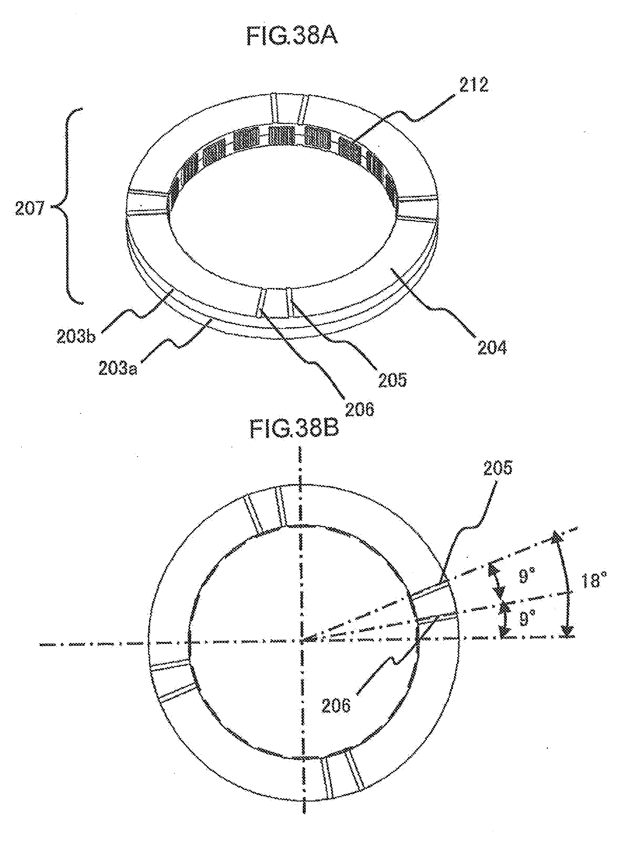

FIGS. 38A and 38B present external views of the full stage stator 207. The laminated assemblies constituting the claw poles 212 are held between holding plates 204. The mechanical strength of the stator is thus determined in correspondence to the strength of the holding plates. The structure of the holding plates assumed at their surfaces ranging along the axial direction as shown in FIG. 38A is now described. A set of positioning grooves 206 and a positioning projection 205 formed with a predetermined positional relationship relative to each other is present at least at three positions along the circumferential direction at the surface of each holding plate 204 ranging along the axial direction. FIG. 38B illustrates this positional relationship. The positional relationship shown in the figure is adopted in a 20-pole two-stage three-phase motor achieved in the embodiment. As described earlier, when stacking stators over two stages along the axial direction to constitute a two-stage stator unit in a motor, the individual stage stators are disposed with an offset of a 90° electrical angle (a 9° mechanical angle) relative to each other along the circumferential direction via the grooves and the projections. For this reason, each groove and the corresponding projection are set at positions with an offset of 9° relative to each other along the circumferential direction. In addition, since a half phase stator 203a and the other half phase stator 203b are integrated along the axial direction, the positions of the grooves and the projections need to be selected accordingly. In this example, the positional relationship of the upper projection/groove to the lower projection/groove is reversed at a position forming an angle of 9° from the center of a claw pole, i.e., relative to a position equivalent to a quarter of the full cycle of the electrical angle. Accordingly, the positioning groove 206 is formed at a position offset by 9° from the center of the claw pole and the corresponding projection is formed at a position forming an angle of 9° from the positioning groove. By forming positioning projection/groove pairs at positions set over equal intervals of 90°, positioning along the circumferential direction is enabled.

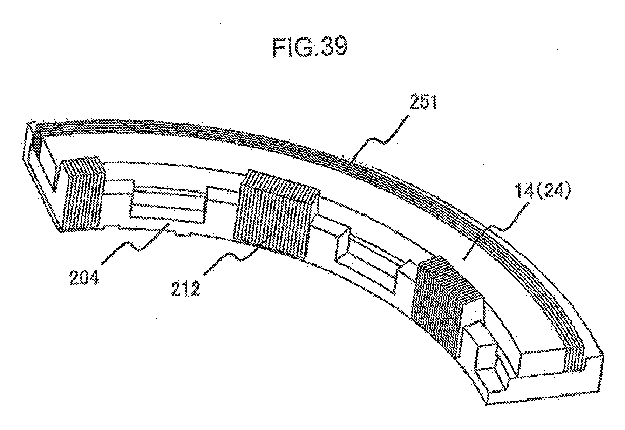

FIG. 39 presents an example of a structure that the holding plates 204 may assume in a sectional view. The holding plates 204 each include guide portions via which the ring-shaped yoke portion 51 is held fast, in addition to the grooves formed to hold the laminated core blocks of the stator. More specifically, the yoke portion 251 is exclusively positioned relative to the holding plates 204 assuming a greater thickness along the axial direction than the laminated core blocks and also assuming a greater measurement along the circumferential direction than the outer diameter of the yoke portion 251. The holding plates also each include guide portions at which the stator coil 14 (24) is held from the inside. More specifically, the holding plates 204 are formed so as to assume a greater thickness along the axial direction than the core blocks and assume a smaller measurement along the circumferential direction than the inner diameter of the stator coil 14 (24). Via this guide portion, the stator coil 14 (24) is exclusively positioned between the yoke portion 251 and the guide portion.

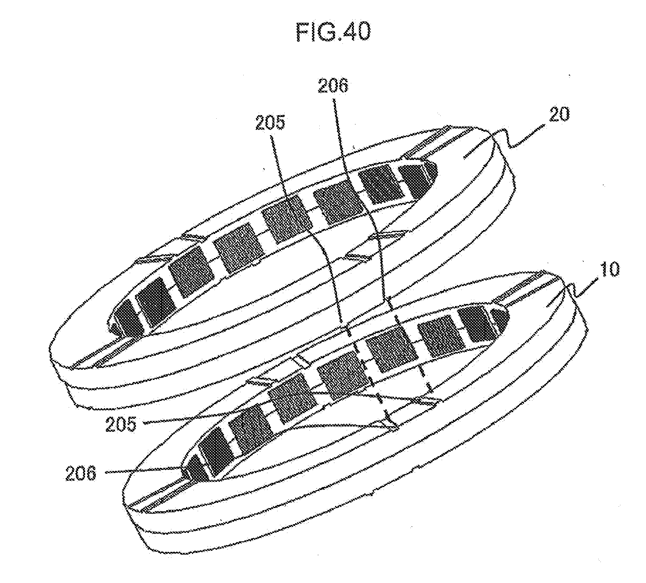

FIG. 40 illustrates how the stators may be positioned relative to each other. As has been described in reference to FIGS. 38A and 38B, the positional relationship among the stage stators is exclusively determined as the grooves and the projections formed at the holding plates 204 along the axial direction are interlocked. The positioning projections 205 and the positioning grooves 206 formed at the upper surface of the stage stator (A core 10) in FIG. 40 are made to fit with the positioning grooves 206 and the positioning projections 205 formed at the lower surface of the stage stator (B core 10). The grooves are made to interlock with the projections on the other side at four positions along the circumferential direction and as they interlock at these four positions, the two stage stators are assembled. Since the two stage stators are held together without being allowed to move in either the X direction or the Y direction over a plane perpendicular to the axis, exclusive positioning is enabled. The claws at the stage stators positioned relative to each other in the exclusive relationship are offset by a 90° electrical angle, measured from a given claw center to the claw center, as shown in FIGS. 38A and 38B (with an offset of a 9° mechanical angle in conjunction with the 20-pole configuration in the example presented in the figure). The inner circumferential surface and the outer circumferential surface of the stator unit may be machined for optimal application in a rotating electrical machine such as a motor or a dynamo electric generator. With the individual stage stators positioned via the positioning projections and the positioning grooves at the holding plates, the inner circumferential surface and the outer circumferential surface are machined so as to achieve a high level of circularity by using a machining tool such as a lathe. The inner circumferential surface and the outer circumferential surface in the assembled state both assume an angular contour forming a polygonal shape along the circumference due to the presence of the end surfaces of the laminated assemblies. For this reason, when the rotor with a round section is disposed on the inner circumferential side, non-uniform gaps may be formed and, in such a case, the rotating electrical machine may fail to achieve a satisfactory magnetic flux distribution. Accordingly, by machining the inner circumference through trimming or grinding, better characteristics can be assured. It will be obvious, however, that the rotating electrical machine may be utilized without first machining the inner circumference, as long as the desired characteristics are already assured. In addition, the rotating electrical machine may be assembled by ensuring that the claw poles are disposed so as to achieve a smooth, round contour along the circumferential direction. The inner circumferential surface may be machined to achieve a diameter of, for instance, 0100 mm $\pm$ 0.01 mm.

A motor similar to that shown in FIG. 17 may be assembled by adopting the embodiment. Namely, a compact motor achieving a lowprofile along the axial direction with no coil ends present along the axial direction, equipped with a ring magnet rotor, a squirrel-cage conductive motor, a rotor equipped with embedded magnets, a salient-pole rotor with no magnet, a reluctance type rotor assuming varying levels of magnetic resistance or a Ludell-type rotor, can be formed by adopting the present invention.

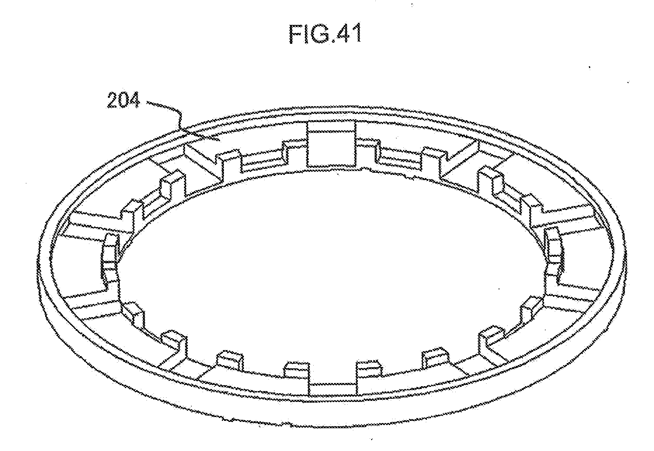

FIG. 41 shows a structure that may be adopted in the holding plates 204. By assuming a specific structure in the holding plates, the motor productivity and characteristics can be improved. The holding plates each include grooves at which the laminated core blocks are held and an outer side wall via which the ring-shaped yoke portion 251 is exclusively positioned and held. In addition, the stator coil 14 (24) is held via the outer side wall and the yoke portion 251. Such holding plates 204 may be manufactured by using any of the materials listed in reference to the holding plates 204 in the previous embodiments.

-Sixteenth Embodiment-

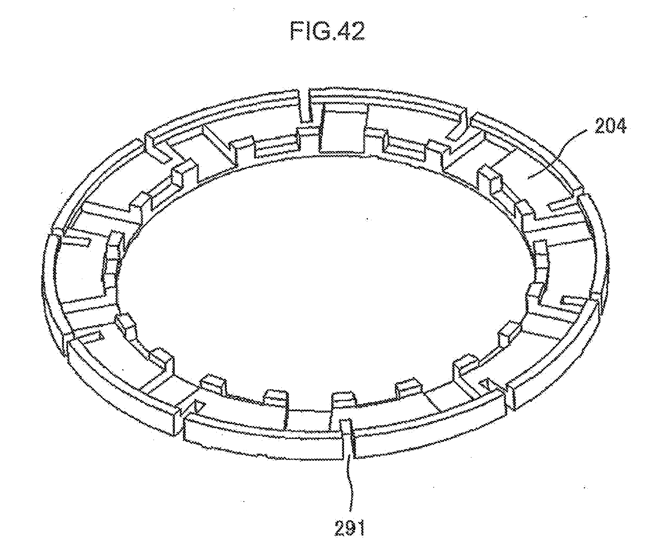

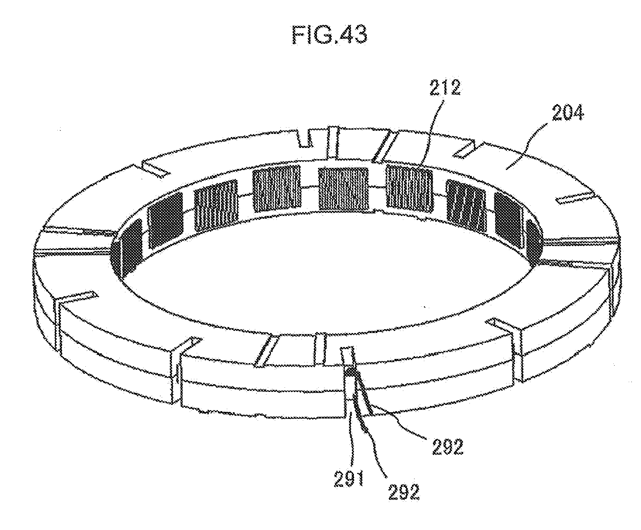

In reference to FIGS. 42 and 43, an embodiment achieved by forming lead grooves via which the ends of the coils 2 are led out at the holding plate 204 shown in FIG. 41 is described. The embodiment is identical to the 15th embodiment except for the particular features described below.

When the present invention is adopted in, for instance, a dynamo electric generator, the leader wires of the individual coils need to be led out from the stators, in order to output the electric currents flowing through the stator coils 14 (24) corresponding to the U-phase, the V-phase and the W-phase to the rectifier circuit 115 such as that shown in FIG. 11. It is to be noted that when the present invention is adopted in a motor, connectors used to connect the coils to the U, V and W arms at the inverter are equivalent to the leader wires. In the embodiment, lead grooves 291, through which the stator coils 14 (24) are led out are formed at the holding plates 204 so as to draw out leader wires 292 of the stator coils 14 (24) from the holding plates 204 via the lead grooves, as shown in FIGS. 42 and 43. As shown in FIG. 43, the lead grooves 291 should each be formed between a claw pole and another claw pole. The lead grooves 291 may be formed in a quantity other than that shown in the figure. For instance, the number of lead grooves may match the number of leader wires 292 required in the generator. In addition, the lead grooves 291 may be each constituted with a hole or a clearance instead of a groove. Furthermore, it is not necessary to lead out a plurality of leader wires 292 through a single lead groove 291 and they may be led out through any lead grooves 291.

-Seventeenth Embodiment-

An application mode developed to improve the productivity of the stator unit adopting the structure explained in reference to the 15th embodiment is described.

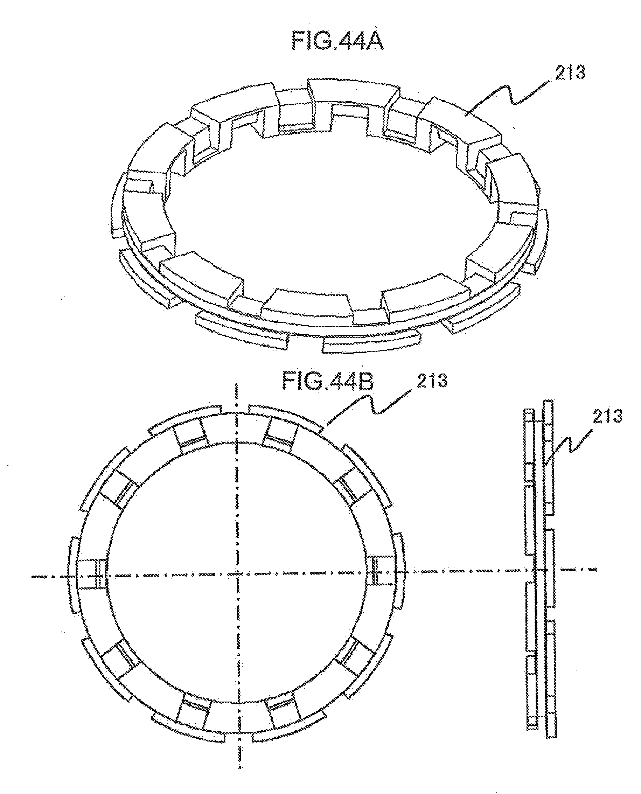

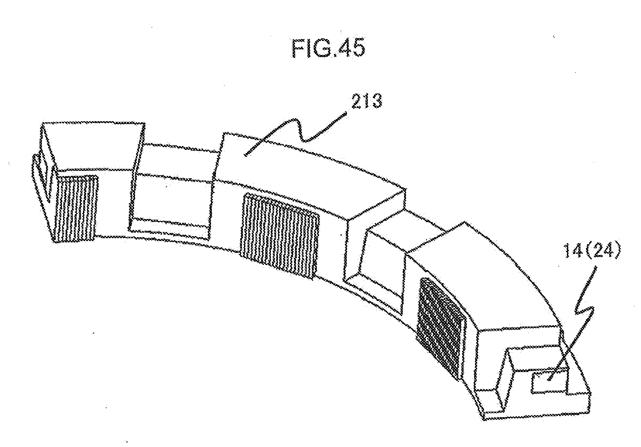

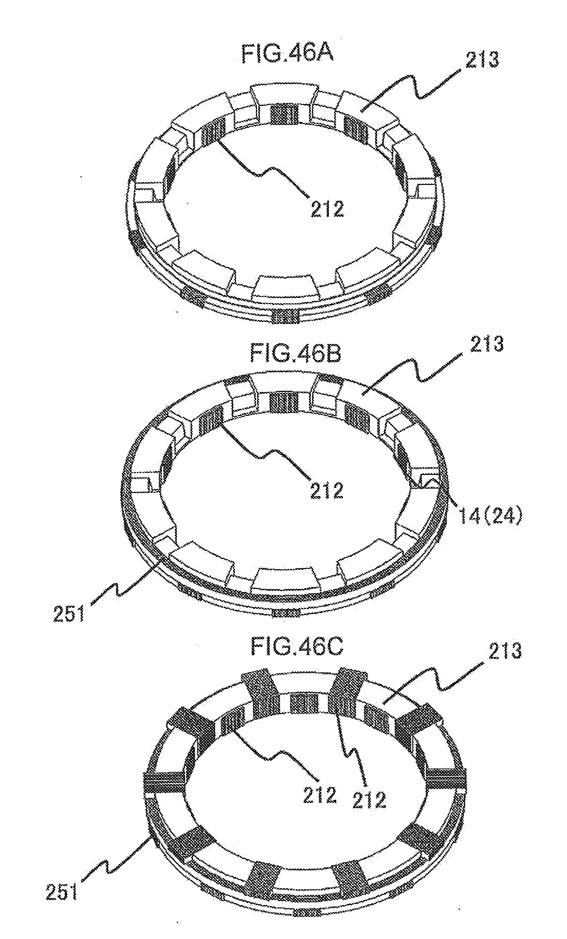

FIG. 44A is a perspective of a winding bobbin 213, which functions as a holding plate to hold the coil wound at the stator. FIG. 44B presents a front view and a side elevation of the winding bobbin shown in FIG. 44A. As do the holding plates shown in FIG. 41, the winding bobbin 213 includes grooves at which the laminated core blocks are held, as clearly illustrated in the front view. The grooves used to hold the laminated core blocks are formed both at the front surface and at the rear surface of the winding bobbin. In addition, the grooves formed at the front surface to hold the laminated core blocks and the grooves formed at the rear surface to hold the laminated core blocks are offset relative to each other by a predetermined angle along the circumferential direction. As illustrated in the side elevation and the perspective, the bobbin also includes grooves through which a ring-shaped winding is disposed. FIG. 45 shows the winding bobbin 213 in a sectional view, so as to better show the stator coil 14 (24) wound around the winding bobbin 213. Within the winding bobbin, the ring-shaped coil is installed. FIG. 46A illustrates how the laminated core blocks are assembled in conjunction with the bobbin. Via the winding bobbin 213, the laminated core blocks can be held so as to form a circle within the groove in which the laminated core blocks are held. FIG. 46B illustrates how the bobbin and the laminated core blocks are then combined with the ring-shaped yoke portion. The figure clearly indicates that the yoke portion can be disposed on the outer circumferential side of the winding bobbin 213. FIG. 46C shows the assembled stator, which is a stage stator similar to that shown in FIG. 38A.

-Eighteenth Embodiment-

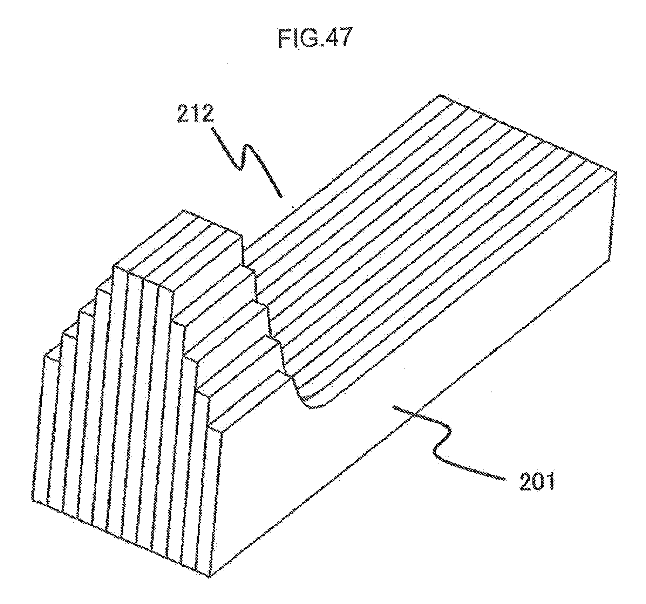

Next, a method that may be adopted in order to improve the characteristics of a motor adopting the 15th embodiment is described in reference to FIG. 47. The embodiment is similar to the 15th embodiment except for the specific features detailed below.

The claw poles at a claw pole motor normally assume a crested shape tapering toward the claw front ends. Such a shape may be formed by punching individual metal sheets or individual groups of metal sheets in different shapes and layering them one on top of another. FIG. 47 shows a claw pole formed through such a method. Blanks such as that shown in FIG. 35A are obtained through punching by adjusting the height of the area to form the claw pole in correspondence to each blank, and then the blanks are layered to form a laminated core block so as to achieve the shape illustrated in the figure. The taper angle of the claw is determined in relation to the number of poles.

-Nineteenth Embodiment-

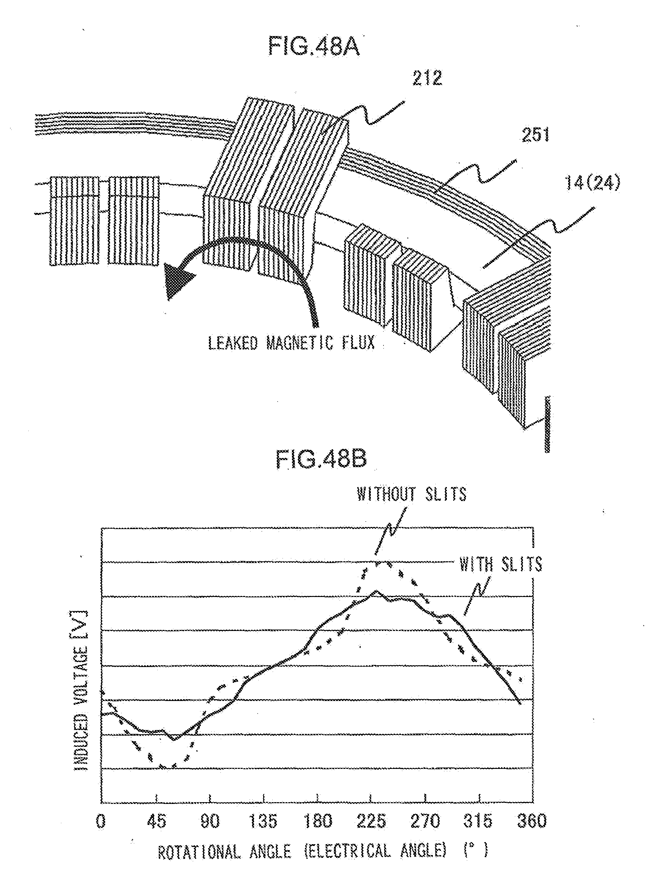

In reference to FIGS. 48A and 48B, a structure that may be adopted in the laminated core blocks to improve the motor efficiency by reducing the extent of distortion of the induced voltage is described. The embodiment is similar to the 15th embodiment except for the specific features detailed below.

Since the motor output torque is in proportion to the level of induced voltage, a distortion of the induced voltage causes pulsation in the motor output torque, which, in turn, causes motor vibration and noise. For this reason, the induced voltage should assume a waveform as close as possible to a sine wave. One of the primary causes of induced voltage distortion is magnetic flux leakage. The magnetic flux leakage shown in FIG. 48A does not interlink with the coil and thus does not contribute in any way whatsoever to the motor characteristics. It simply induces magnetic saturation at the core, which leads to distortion of the induced voltage. In addition, the leaked magnetic flux flowing along the direction in which the metal sheets are layered to form the laminated core blocks, induces an eddy current inside the laminated core to lower the motor efficiency. The structure assumed for the laminated core blocks shown in FIG. 48A reduces such magnetic flux leakage. In FIG. 48A, two laminated core blocks form a single pole. Namely, a slit is formed at a halfway position along the circumferential direction at a claw pole. In this structure, the magnetic resistance in the magnetic path of the leaked magnetic flux is increased via the slit, thereby reducing the magnetic flux leakage. As a result, the extent of magnetic saturation at the core attributable to leaked magnetic flux is lessened, which, in turn, reduces the extent of distortion of the induced voltage. FIG. 48B presents examples of the voltage waveforms of voltages induced at claw poles with/without slits formed at the halfway positions. The graph presented in FIG. 48B indicates that the presence of the slits reduces the extent of distortion of the induced voltage. Furthermore, since the eddy current loss attributable to magnetic flux leakage is reduced, the motor efficiency is improved.

-Twentieth Embodiment-

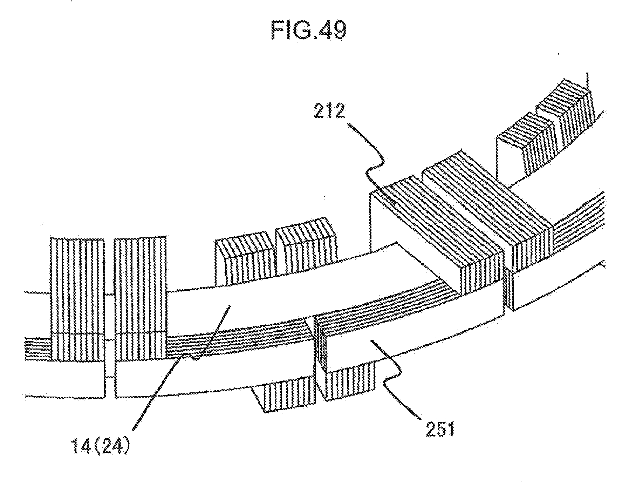

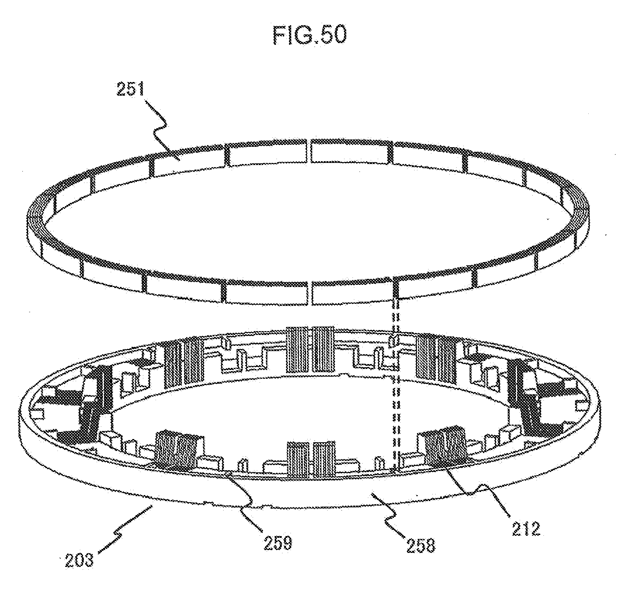

FIG. 49 shows a structure that may be adopted in conjunction with the 19th embodiment in order to manufacture a large unit with a high level of productivity. FIG. 49 shows two laminated core blocks forming a single pole. In addition, the yoke portion 251 is split into a plurality of separate blocks along the circumferential direction. In the example presented in FIG. 49, the yoke portion 251 is separated into a plurality of blocks at halfway positions of the individual poles. Namely, a magnetic flux originating from the rotor and flowing in through a claw pole flows to the yoke portion blocks 251 on the left side and the right side thereof and then flows out toward the rotor through the claw poles 212 present next to the entry pole along the circumferential direction. Since this structure simplifies the process of layering the metal sheets to form the yoke portion 251, compared to the process that must be performed to form a ring-shaped yoke portion 251, the productivity is improved. In addition, compared to the ring-shaped yoke portion 51, the yoke portion blocks 51 can formed with greater ease. FIG. 50 shows a structure that may be adopted in the holding plates 204 in conjunction with the split yoke portion blocks. The holding plates 4 each include grooves at which the laminated core blocks are held and also include recesses and projections used to exclusively position and hold the split yoke portion blocks 251. More specifically, an outer circumferential wall 258 of the holding plate 4 exclusively determines the positions of the split yoke portion blocks 251 along the radial direction, whereas a plurality of projections 259 formed along the circumferential direction exclusively determines the positions of the split yoke portion blocks 251 along the circumferential direction. As a result, a half stage stator 203 with the split yoke portion blocks 251 thereof positioned exclusively is obtained.

-Twenty-first Embodiment-

In reference to the 21st embodiment, an N-phase motor that includes an N-phase coil system with coils corresponding to the U-phase, the V-phase and the W-phase wound so as to achieve N different turn ratios is described. The magnetomotive force $I^k_n$ formed via a kth coil group in the N-phase coil system can be written in complex representation as;

$$I^k_n = I_c \exp(j2\pi k/n) \quad (k=1,2,\cdots\cdots,n) \quad \cdots(101)$$

$N^k_U$, $N^k_V$ and $N^k_W$ respectively represent the numbers of turns at the U-phase coil, the V-phase coil and the W-phase coil in the kth coil group of the N-phase coil system. The numbers of coil turns may each assume a positive value, the value 0 or a negative value. When the number of coil turns assumes a negative value, the coil is wound along the reverse direction. In addition, the number of coil turns does not need to be a positive or negative integer and may assume a positive or negative non-integral value. When the number of coil turns assumes a non-integral value, the coil is wound through a hole formed at a magnetic pole so as to partially interlink the pole.

The magnetomotive force $I^k_n$ formed via the kth coil group in the N-phase coil system can be expressed as below

$$I^k_n = N^k_U I_U + N^k_V I_V + N^k_W I_W \quad \cdots(102)$$

$I_u$, $I_v$, and $I_w$ in the expression provided above respectively represent the U-phase coil current, the V-phase coil current and the W-phase coil current. $I_u$, $I_v$, and $I_w$ can be expressed as below in complex representation

$$I_U = I, \quad I_V = I\exp(-j2\pi/3), \quad I_W = I\exp(j2\pi/3) \quad \cdots(103)$$

Expressions (101), (102) and (103) are incorporated into the following expression:

$$I_c \exp(j2\pi k/n) = I[N^k_U + N^k_V \exp(-j2\pi/3) + N^k_W \exp(j2\pi/3)] \quad \cdots(104)$$

Based upon expression (104), the following expressions are written

$$I[N^k_U - (N^k_V + N^k_W)/2] = I_c \cos(2\pi k/n) \quad \cdots(105)$$

$$(\sqrt{3})I(N^k_W - N^k_V)/2 = I_c \sin(2\pi k/n) \quad \cdots(106)$$

The following expressions are written based upon the expressions above

$$N^k_U - N^k_V = (I_c/I)[\cos(2\pi k/n) + \sin(2\pi k/n)/\sqrt{3}] \quad \cdots(107)$$

$$N^k_U - N^k_W = (I_c/I)\,[\cos(2\pi k/n) - \sin(2\pi k/n)/\sqrt{3}] \quad ...(108)$$

The coils in the kth coil group in the N-phase coil system are wound with the numbers of coil turns $N^k_U$, $N^k_V$ and $N^k_W$ substantially satisfying the relationships expressed in (107) and (108).

Since a multiphase motor can be manufactured by using the three phase coil system described above, the number of power transistors used to supply coil currents can be reduced over that required in a standard multiphase motor equipped with a standard multiphase coil system. Ultimately, a multiphase motor that manifests a lesser extent of torque fluctuation, rotates smoothly and allows precise positioning is provided.

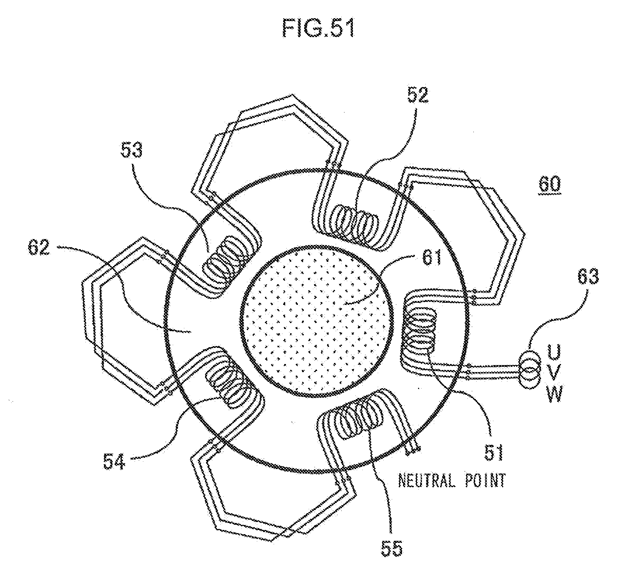

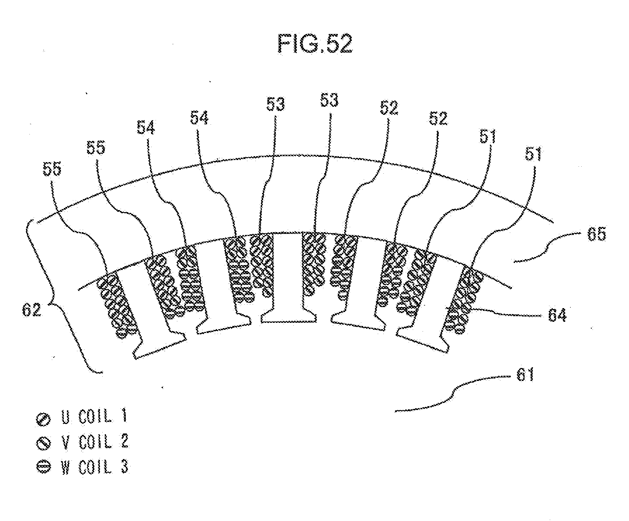

FIG. 51 shows a five-phase motor achieved in an embodiment of the present invention, which is equipped with three phase coils, i.e., the U-, V- and W-phase coils. A motor 60 includes a rotor 61, a stator 62, a three-phase AC power source 63 corresponding to the U, V and W phases and a first coil group 51, a second coil group 52, a third coil group 53, a fourth coil group 54 and a fifth coil group 55 in the five-phase coil system. FIG. 52 shows how the three-phase coil, i.e., the U-phase coils, the V-phase coils and the W-phase coils may be installed. U-phase coils 1, V-phase coils 2 and W-phase coils 3 are wound together around stator teeth 64.

Expressions (107) and (108) indicating the relationship among the numbers of turns $N^k_U$, $N^k_V$ and $N^k_W$ of the U-phase coil, the V-phase coil and the W-phase coil in the kth coil group are written as;

$$N^k_U - N^k_V = (I_c/I)\,[\cos(2\pi k/5) + \sin(2\pi k/5)/\sqrt{3}] \quad ...(109)$$

$$N^k_U - N^k_W = (I_c/I)\,[\cos(2\pi k/5) - \sin(2\pi k/5)/\sqrt{3}] \quad ...(110)$$

Therefore;

$$N^1_U - N^1_V = (I_c/I)\,[\cos(2\pi/5) + \sin(2\pi/5)/\sqrt{3}]$$
$$= 0.86\,(I_c/I) \quad ...(111)$$

$$N^2_U - N^2_V = (I_c/I)\,[\cos(4\pi/5) + \sin(4\pi/5)/\sqrt{3}]$$
$$= -0.47\,(I_c/I) \quad ...(112)$$

$$N^3_U - N^3_V = (I_c/I)\,[\cos(6\pi/5) + \sin(6\pi/5)/\sqrt{3}]$$
$$= -1.15\,(I_c/I) \quad ...(113)$$

$$N^4_U - N^4_V = (I_c/I)\,[\cos(8\pi/5) + \sin(8\pi/5)/\sqrt{3}]$$
$$= -0.24\,(I_c/I) \quad ...(114)$$

$$N^5_U - N^5_V = (I_c/I)\,[\cos(10\pi/5) + \sin(10\pi/5)/\sqrt{3}]$$
$$= (I_c/I) \quad ...(115)$$

$$N^1{}_U - N^1{}_W = (I_c/I)\,[\cos(2\pi/5) - \sin(2\pi/5)/\sqrt{3}]$$
$$= -0.24\,(I_c/I) \qquad \ldots(116)$$

$$N^2{}_U - N^2{}_W = (I_c/I)\,[\cos(4\pi/5) - \sin(4\pi/5)/\sqrt{3}]$$
$$= -1.15\,(I_c/I) \qquad \ldots(117)$$

$$N^3{}_U - N^3{}_W = (I_c/I)\,[\cos(6\pi/5) - \sin(6\pi/5)/\sqrt{3}]$$
$$= -0.47\,(I_c/I) \qquad \ldots(118)$$

$$N^4{}_U - N^4{}_W = (I_c/I)\,[\cos(8\pi/5) - \sin(8\pi/5)/\sqrt{3}]$$
$$= 0.86\,(I_c/I) \qquad \ldots(119)$$

$$N^5{}_U - N^5{}_W = (I_c/I)\,[\cos(10\pi/5) - \sin(10\pi/5)/\sqrt{3}]$$

$$= (I_c/I) \qquad \ldots(120)$$

Based upon the expressions above, the following expressions are written;

$$N^1{}_U = N^1, \quad N^1{}_V = N^1 - 0.86\,(I_c/I), \quad N^1{}_W = N^1 + 0.24\,(I_c/I) \quad \ldots(121)$$

$$N^2{}_U = N^2, \quad N^2{}_V = N^2 + 0.47\,(I_c/I), \quad N^2{}_W = N^2 + 1.15\,(I_c/I) \quad \ldots(122)$$

$$N^3{}_U = N^3, \quad N^3{}_V = N^3 + 1.15\,(I_c/I), \quad N^3{}_W = N^3 + 0.47\,(I_c/I) \quad \ldots(123)$$

$$N^4{}_U = N^4, \quad N^4{}_V = N^4 + 0.24\,(I_c/I), \quad N^4{}_W = N^4 - 0.86\,(I_c/I) \quad \ldots(124)$$

$$N^5{}_U = N^5, \quad N^5{}_V = N^5 - (I_c/I), \quad N^5{}_W = N^5 - (I_c/I) \qquad \ldots(125)$$

When $I_c/I$, i.e., the ratio of the peak value of the magnetomotive force generated via a specific coil group and the peak value among the coil currents flowing through the three-phase coils, i.e., the U-phase coil, the V-phase coil and the W-phase coil, is 10, the following values are calculated;

$$N^1{}_U = N^1, \quad N^1{}_V = N^1 - 8.6, \quad N^1{}_W = N^1 + 2.4 \qquad \ldots(126)$$

$$N^2_U=N^2, \quad N^2_V=N^2+4.7, \quad N^2_W=N^2+11.5 \qquad ...(127)$$

$$N^3_U=N^3, \quad N^3_V=N^3+11.5, \quad N^3_W=N^3+4.7 \qquad ...(128)$$

$$N^4_U=N^4, \quad N^4_V=N^4+2.4, \quad N^4_W=N^4-8.6 \qquad ...(129)$$

$$N^5_U=N^5, \quad N^5_V=N^5-10, \quad N^5_W=N^5-10 \qquad ...(130)$$

It is desirable that stator slots assuming a given size in a rotating electrical machine contain substantially equal numbers of coils therein. Accordingly, when $N^1_U$, $N^2_U$, $N^3_U$, $N^4_U$ and $N^5_U$ are set to, for instance, 1, -5.2, -5.2, 1 and 8 respectively, the total numbers of coil turns, each representing the sum of the numbers of coil turns for the U-phase coil, the V-phase coil and the W-phase coil in a given coil group, which are equal to one another at 12, can be achieved in all the coil groups by setting $N^1_V$, $N^2_V$, $N^3_V$, $N^4_V$ and $N^5_V$ respectively to -7.6, -0.5, 6.3, 3.4 and -2 and setting $N^1_W$, $N^2_W$, $N^3_W$, $N^4_W$ and $N^5_W$ respectively to 3.4, 6.3, -0.5, -7.6 and -2. When the number of coil turns for a given coil assumes a non-integral value, a hole may be formed at a pole through which the coil is wound so as to partially interlink the pole.

However, if only a multiphase motor approximating a five phase system instead of the exact five-phase system is required, all the coils may be wound with integral numbers of turns by setting $N^1_U$, $N^2_U$, $N^3_U$, $N^4_U$ and $N^5_U$ respectively to 1, -5, -5, 1 and 8, setting $N^1_V$, $N^2_V$, $N^3_V$, $N^4_V$ and $N^5_V$ respectively to -8, 0, 6, 3 and -2 and setting $N^1_W$, $N^2_W$, $N^3_W$, $N^4_W$ and $N^5_W$ respectively to 3, 6, 0, -8 and -2. Under such circumstances, the total sum of coil turns in the kth coil group in the five-phase system is $|N^k_U| + |N^k_V| + |N^k_W|$. The total sums of coil turns in the first, second, third, fourth and fifth coil groups are accordingly calculated tobe 12, 11, 11, 12 and 12 respectively.

The ratio of the self inductances at the individual coils is;

$$L_U:L_V:L_W=\Sigma(N^k_U)^2:\Sigma(N^k_V)^2:\Sigma(N^k_W)^2 \qquad ...(131)$$

Thus, the ratio under the circumstances described above is $L_U: L_V: L_W$ = 116: 113: 113, implying that the balance among the self inductances at the three-phase coils corresponding to the U-phase, the V-phase and the W-phase is substantially maintained without any significant disruption.

The magnetomotive force $I^k_5$ generated via the kth coil group in the five-phase rotating electrical machine in this situation is written as;

$$I^k_5=I[N^k_U+N^k_V\exp(-j2\pi/3)+N^k_W\exp(j2\pi/3)]...(132)$$

Hence;

$$I^1_5=I[1-8\exp(-j2\pi/3)+3\exp(j2\pi/3)]$$
$$=I[3.5+j5.5\sqrt{3}]=10.1\exp(j\theta_1) \qquad ...(133)$$

$$I^2_5=I[-5+6\exp(j2\pi/3)]=I[-8+j3\sqrt{3}]$$
$$=9.54\exp(j\theta_2) \qquad ...(134)$$

$$I^3_5 = I[-5+6\exp(-j2\pi/3)] = I[-8-j3\sqrt{3}]$$
$$= 9.54\exp(-j\theta_2) \qquad \ldots(135)$$

$$I^4_5 = I[1+3\exp(-j2\pi/3)-8\exp(j2\pi/3)]$$
$$= I[3.5-j5.5\sqrt{3}] = 10.1\exp(-j\theta_1) \quad \ldots(136)$$

$$I^5_5 = I[8-2\exp(-j2\pi/3)-2\exp(j2\pi/3)]$$
$$= 10I \qquad \ldots(137)$$

$\theta_1$ and $\theta_2$ are respectively 70° and 147°, which are fairly close to $\theta_1 = 72°$ and $\theta_2 = 144°$ in a system assuming exactly five phases. In other words, a fairly good approximation of the five-phase system is achieved. While the rotating electrical machine in the example described above includes coils wound through concentrated winding, the present invention may also be adopted equally effectively in conjunction with coils wound through distributed winding.

A five-phase motor in the related art requires a five-phase coil power source equipped with at least five power transistors in the coil power source circuit. The structure achieved in the embodiment, however, only requires three-phase coils corresponding to the U-phase, the V-phase and the W-phase, allowing the use of a common three-phase coil power source with its coil power source circuit equipped with three power transistors connected through a star connection.

-Twenty-second Embodiment-

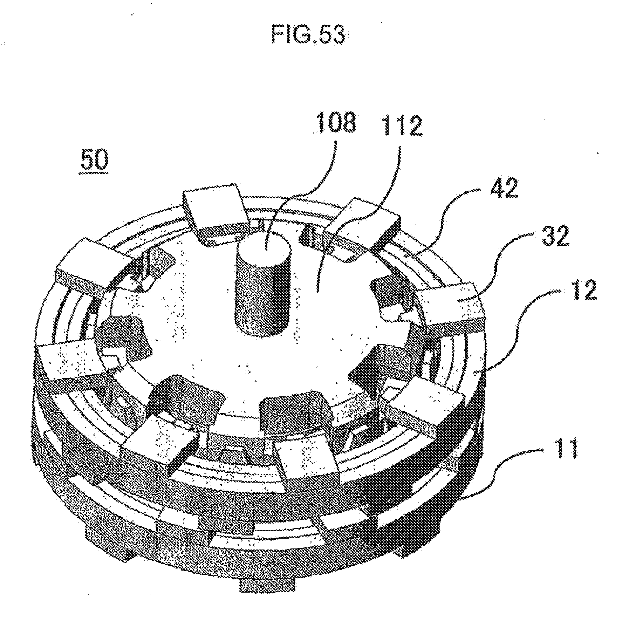

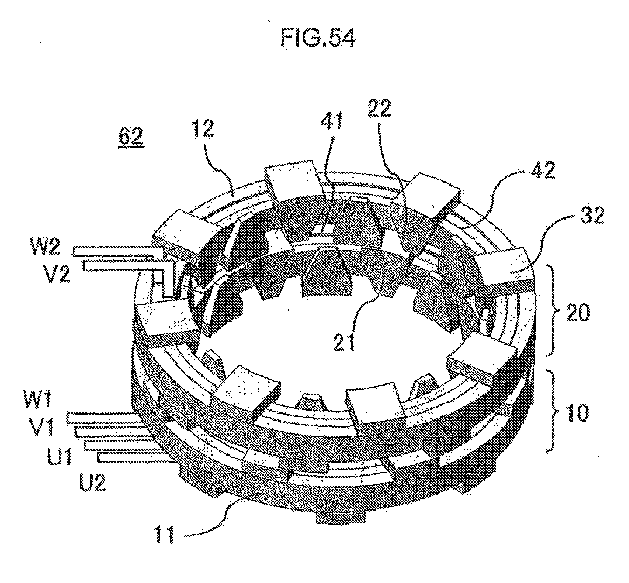

FIG. 53 shows a motor equipped with a claw pole stator achieved in the 22nd embodiment of the present invention. The embodiment is achieved by modifying a three-phase structure to a four-phase structure and selectively using two phases with a 90° phase difference relative to each other among the four phases. A stator adopting a two-stage structure is formed along the rotary shaft, as shown in FIG. 54. A stator unit 1 is constituted with two stator stages, i.e., an A core 10 and a B core 20. The two stator stages respectively include coils 41 and 42 each formed by winding an electrical conductor in a ring shape a plurality of times, ring-shaped core backs 11 and 21 respectively disposed so as to cover the outer circumferences of the coils 41 and 41 and claw poles 21, 22, 31 and 32 with clawpoles 21 and 31 assuming reverse orientations to each other and taking up alternate positions along the circumferential direction at a side surface along the axial direction at the corresponding core back 11 and the claw poles 22 and 32 assuming reverse orientations to each other and taking up alternate positions along the circumferential direction at a side surface along the axial direction at the corresponding core back 21. Namely, the ring-shaped stator coil 41 is wound around the A core 10 through the areas enclosed by the core back 11 and the claw poles 21 and 31, whereas the ring-shaped stator coil 42 is wound around the B core 20 through the areas enclosed by the core back 12 and the claw poles 22 and 32. The coils are each held along the axial direction at the stator 62 between each claw pole and the next claw pole, which assumes the opposite polarity. The core backs each form the magnetic path between adjacent magnetic_poles. The coils include a U1 coil, a U2 coil, a V1 coil, a V2 coil, a W1 coil and a W2 coil and their leader wires are shown in the figure. These coils are to be described in detail later.

The core backs 11 and 12 and the claw poles 21, 22, 31 and 32 maybe either constituted with a soft magnetic composite or laminated iron-group metal sheets.

The stator unit 62 includes two stator stages, i.e., the A core 10 and the B core 20, disposed along the direction in which the rotary shaft extends and the poles at the two stator stages are set with the phase difference relative to each other equal to an electrical angle of 90°. In the example described in reference to the embodiment, the three-phase coil structure is modified into a four-phase system and two phases, i.e., 1 and 2 assumed for k, are used. Such a rotating electrical machine is to be referred to as a three-phase coil, four-phase system, two-phase drive rotating electrical machine.

Based upon expressions (107) and (108), the following relational expressions are written with regard to the numbers of coil turns $N^1_U$, $N^1_V$, $N^1_W$, $N^2_U$, $N^2_V$, and $N^2_W$.

$$N^1_U - N^1_V = (I_c/I)[\cos(2\pi/4) + \sin(2\pi/4)/\sqrt{3}]$$

$$= 0.58(I_c/I) \qquad \ldots(138)$$

$$N^2_U - N^2_V = (I_c/I)[\cos(4\pi/4) + \sin(4\pi/4)/\sqrt{3}]$$

$$= -(I_c/I) \qquad \ldots(139)$$

$$N^1_U - N^1_W = (I_c/I)[\cos(2\pi/4) - \sin(2\pi/4)/\sqrt{3}]$$

$$= -0.58(I_c/I) \qquad \ldots(140)$$

$$N^2_U - N^2_W = (I_c/I)[\cos(4\pi/4) - \sin(4\pi/4)/\sqrt{3}]$$

$$= -(I_c/I) \qquad \ldots(141)$$

Hence;

$$N^1_U = N^1, \quad N^1_V = N^1 - 0.58(I_c/I), \quad N^1_W = N^1 + 0.58(I_c/I) \quad \ldots(142)$$

$$N^2_U = N^2, \quad N^2_V = N^2 + (I_c/I), \quad N^2_W = N^2 + (I_c/I) \qquad \ldots(143)$$

When $I_c/I$ indicating the ratio of the peak value of the magnetomotive force generated via a coil group and the peak value of the coil current flowing through the three-phase coils corresponding to the U-phase, the V-phase and the W-phase is 9,

$$N^1_U = N^1, \quad N^1_V = N^1 - 5.2, \quad N^1_W = N^1 + 5.2 \qquad \ldots(144)$$

$$N^2_U = N^2, \quad N^2_V = N^2 + 9, \quad N^2_W = N^2 + 9 \qquad \ldots(145)$$

When $N^1_U$ and $N^2_U$ are set to, for instance, 0 and -6 respectively, the total numbers of coil turns, each representing the sum of the numbers of coil turns for the U-phase coil, the V-phase coil and the W-phase coil in a given coil group, which are close to one another at 10.4 and 12, can be achieved in the individual the coil groups by setting $N^1_V$, and $N^2_V$ respectively to -5.2 and 3 and setting $N^1_W$ and $N^2_W$ respectively to 5.2 and 3 at the two-stage stator. When the number of coil turns assumes a non-integral value, the corresponding coil has the entry point and then exit point at different positions.
However, if a motor only approximating a two-phase system instead of the exact two-phase system is required, all the coils may be wound with integral numbers of turns by setting $N^1_U$ and $N^2_U$ respectively to 0 and -6, setting $N^1_V$ and $N^2_V$ respectively to -5 and 3 and setting $N^1_W$ and $N^2_W$ respectively to 5 and 3. Total numbers of coil turns in the individual coil groups at this two-phase stator are respectively 10 and 12. The ratio Lu: Lv: Lw of the self inductances of the various coils is 36: 34: 34, implying that the balance of the self inductances at the three-phase coils corresponding to the U, V and W phases is substantially maintained without a significant disruption.
The magnetomotive force $I^k_4$ generated via the kth coil group in the three-phase coil, four-phase system, two-phase drive rotating electrical machine in this situation is written as;

$$I^k_4 = I[N^k_U + N^k_V \exp(-j2\pi/3) + N^k_W \exp(j2\pi/3)] \quad \dots \quad (146)$$

Hence;

$$I^1_4 = I[-6\exp(-j2\pi/3) + 6\exp(j2\pi/3)]$$

$$= I[3.5 + j5.5\sqrt{3}] = 10.4jI \qquad \dots (147)$$

$$I^2_4 = I[-7 + 3\exp(-j2\pi/3) + 3\exp(j2\pi/3)]$$

$$= I[-8 + j3\sqrt{3}] = -10I \qquad \cdots (148)$$

Thus, a system substantially assuming a fairly good approximation of a partial four phase system is achieved.

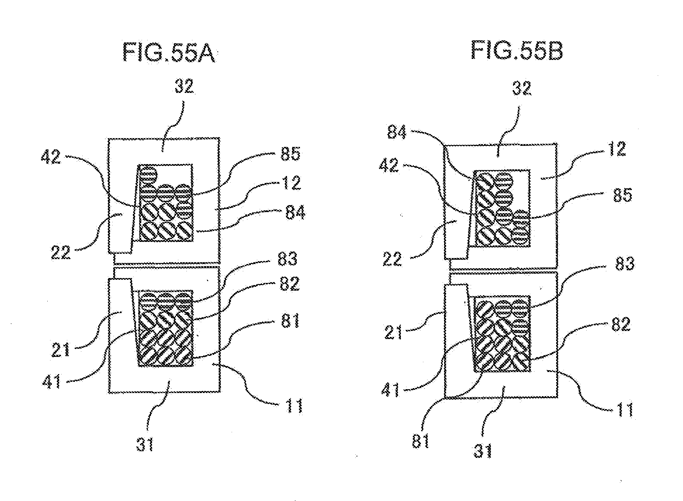

FIGS. 55A and 55B show the coils wound with such numbers of turns. The coil group 2 is wound at the A core 10, whereas the coil group 1 is wound at the B core 20. In the figure, U-, V- and W-phase coils are wound at the A core 10, whereas only V- and W-phase coils are wound at the B core 20 with no U-phase coil. Accordingly, four leader lines are led out from the A core 10 and two leader lines are led out from the B core 20 in FIG. 4.

FIGS. 55A and 55B show the U-phase coil 81, the V-phase coils 82 and 84 and the W-phase coils 83 and 85 wound through the A core 10 and the B core 20 in the stator assuming the two-stage structure in a sectional view. In the example presented in FIG. 55A, the coils are wound in the order of the U-phase, the V-phase and the W-phase, from the bottom side toward the top side, whereas the coils are wound in the example presented in FIG. 55B in the order of the U-phase, the V-phase and the W-phase from the inner side toward the outer side. A coil assembly with individual coils wound in advance in either manner may be installed.

As described above, coils corresponding to a plurality of phases are installed at least at one of the stator stages. The numbers of coil turns are set so that the electrical angle phases of magnetic fluxes induced at the stator cores disposed at the upper stage and the lower stage are offset by approximately 90° relative to each other or by a value represented by a substantial semi-integral multiple of n.

While a claw pole stator unit in a motor in the related art needs to assume a three-stage structure with stators disposed over three stages along the rotary shaft so as to wind the three-phase coils corresponding to the U-phase, the V-phase and the W-phase completely separately from one another, a two-phase core magnetic flux system is achieved by adopting the embodiment. In other words, the structure in the embodiment only requires two-stage stators. Thus, a reduction in the number of required parts is achieved and also, the dimension of the rotary machine taken along the rotary shaft is reduced.

Any of the embodiments described above may be adopted in rotating electrical machines such as motors and generators widely utilized in power generation applications, industrial applications, home appliances applications, automotive applications and the like. Potential areas of application include large-scale machinery such as wind power generators, vehicle drive systems, power generation rotating electrical machines and industrial rotating electrical machines, medium-sized rotating electrical machines used in industrial auxiliary systems and automotive auxiliary systems and small-size rotating electrical machines used in home appliances, OA devices and the like.

The above described embodiments are examples, and various modifications can be made without departing from the scope of the invention.

**Claims**

1. A rotating electrical machine comprising:

   a stator that includes two stator stages each constituted with a plurality of clawpoles extending toward opposite sides along an axial direction at alternate positions and a ring-shaped core back that forms a magnetic path between the claw poles, the two stator stages being stacked over along the axial direction;
   a stator winding formed by winding a coil in a ring shape and disposed in a space enclosed by the claw poles and the core back at each of the stator stages; and
   a rotor rotatably disposed at a position facing the claw poles of the stator, wherein:

stator windings corresponding to a plurality of phases are disposed together at least at one of the two stator stages.

2. A rotating electrical machine according to claim 1, wherein:

the two stator stages at the stator are disposed with an offset along a circumferential direction by an extent equivalent to an electrical angle $\varnothing$ assuming a value which is approximately a semi-integral multiple of n.

3. A rotating electrical machine according to claim 2, wherein:

the angle $\varnothing$ assumed as the offset at the stator is a 90° electrical angle.

4. A rotating electrical machine according to claim 1, wherein:

the stator includes stator windings corresponding to a plurality of phases; and
stator windings corresponding to all the phases are wound at one of the two stator stages and a stator winding corresponding to a certain phase excluding a specific phase is wound at the other stator stage.

5. A rotating electrical machine according to claim 4, wherein:

the stator windings corresponding to the plurality of phases are each wound with a number of turns so that composite magnetic fluxes achieved via the two stator stages achieve magnetic flux linkage waveforms corresponding to the plurality of phases.

6. A rotating electrical machine according to claim 1, wherein:

the stator includes stator windings corresponding to three phases; and
stator windings corresponding to all three phases are wound at one of the two stator stages and stator windings corresponding to two phases excluding a specific phase are wound at the other stator stage.

7. A rotating electrical machine according to claim 1, wherein:

the rotor and the stator have equal numbers of poles.

8. A rotating electrical machine according to claim 1, wherein:

the rotor and the stator both have 20 poles.

9. A rotating electrical machine according to claim 1, wherein:

the core back is formed by laminating a plurality of ring-shaped metal sheets one on top of another along a radial direction relative to a rotary shaft and is disposed so as to cover an outer circumference of the stator winding; and
the claw poles are set alternately at one of side surfaces of the core back present along the axial direction and at an opposite side surface so as to surround the stator winding together with the core back, are formed by laminating metal sheets along a circumferential direction relative to the rotary shaft of the rotor and are connected to the core back so that a magnetic path between adjacent poles is formed via the core back.

10. A rotating electrical machine according to claim 1, wherein:

the claw poles are formed by laminating metal sheets layered one on top of another along a circumferential direction relative to a rotary shaft.

11. A rotating electrical machine according to claim 10, wherein:

the claw poles are each constituted with at least two laminated core blocks and the core blocks are each connected over a portion thereof constituting a yoke, with another laminated core block that assumes an opposite polarity and is present at a next position along the circumferential direction.

**12.** A rotating electrical machine according to claim 1, wherein:

a leader wire of the stator winding is drawn out through a clearance between the claw poles.

**13.** A rotating electrical machine according to claim 1, wherein:

the claw poles and the core back at the stator are constituted of a soft magnetic composite.

**14.** A rotating electrical machine according to claim 1, wherein:

the stator includes a holding plate that holds at least some of the claw poles, the core back and the stator wingding and is used to position components relative to one another.

**15.** A rotating electrical machine according to claim 14, wherein:

the stator stages are each held between two holding plates along the axial direction.

FIG.1

FIG.2 A

FIG.2 B

FIG.3

FIG.4

FIG.5

FIG.6

FIG.7A

LARGEST EFFECTIVE MAGNETIC FLUX
TRAVELING FROM ROTOR TO STATOR COIL

ROTOR ROTATING
DIRECTION
ELECTRICAL ANGLE: 0°

SMALLEST EFFECTIVE MAGNETIC FLUX
TRAVELING FROM ROTOR TO STATOR COIL

FIG.7B

SMALLEST EFFECTIVE MAGNETIC FLUX
TRAVELING FROM ROTOR TO STATOR COIL

ELECTRICAL ANGLE: 90°

LARGEST EFFECTIVE MAGNETIC FLUX
TRAVELING FROM ROTOR TO STATOR COIL

EP 2 053 721 A2

FIG.8

FIG.9

FIG.10

FIG.11

FIG.12 A

201

FIG.12 B

212

201

FIG.12 C

212

210b

210a

FIG.12 D

212

210b

210a

FIG.12 E

212

FIG.12 F

210b

212

210a

FIG.13A

212

204

FIG.13B

212

204

203

FIG.13C

212

204

214

203

FIG.14A

FIG.14B

FIG.15

212    204

14

FIG.16

205

206

20

10

FIG.17

216

211

219a

220

219b

221

214

FIG.18 A

204

FIG.18 B

204

FIG.18 C

204

FIG.19 A

FIG.19 B

203

203

230b

212

230

230a

212

FIG.19 C

232

233

212

231

FIG.20 A

FIG.20 B

207 212 230

212 207 230

FIG.20 C

232

233

212

235

14(24)

235

212

231

FIG.21

12

FIG.22 A

13

FIG.22 B

13

13

FIG.23

213

14(24)

FIG.24A

FIG.24B

FIG.25A

236

201

236

FIG.25B

212

FIG.25C

212

FIG.26 A

FIG.26 B

FIG.26 C

FIG.26 D

FIG.26 E

RING

FIG.26 F

FIG.26 G

FIG.27A

FIG.27B

FIG.27C

FIG.28A

FIG.28B

FIG.28C

FIG.29A

236a
236b
236b
236a
236a
236a
236b

FIG.29B

236a
236b

FIG.30A

212
239
212
239

FIG.30B

212
212

FIG.31A

FIG.31B

BEND R AT BENT AREA: R1

RADIUS OF STATOR WINDING: R2

※R1≦R2

BEND R AT BENT AREA: R1

CORNER R OF STATOR WINDING: R2

※R1≦R2

FIG.32A

245　241　242

FIG.32B

245
242

FIG.32C

245
242

FIG.33A

PITCH: L

WIDTH: B

DEPTH: H

245

242b

FIG.33B

RELATIONSHIP AMONG PITCH/WIDTH RATIO, EDDY CURRENT LOSS AND INDUCED VOLTAGE

EDDY CURRENT LOSS [W]

INDUCED VOLTAGE [V]

0    0.2    0.4    0.6    0.8

B/L

FIG.33C

RELATIONSHIP AMONG DEPTH/WIDTH RATIO, EDDY CURRENT LOSS AND INDUCED VOLTAGE

EDDY CURRENT LOSS [W]

INDUCED VOLTAGE [V]

0    2    4    6

h/B

EP 2 053 721 A2

# FIG.34

CLAW BASE SECTIONAL AREA

242b

MAGNET INSERTION DIRECTION

CLAW WIDTH UP ON ONE SIDE

242b-1

MAGNET INSERTION DIRECTION

242b-7

242b

242

249

CLAW BASE SECTIONAL AREA

242b

MAGNET INSERTION DIRECTION

CLAW WIDTH UP ON ONE SIDE

MAGNET INSERTION DIRECTION

242b-1

Bi

Bo

Bd

242b-7

$\theta_1$

249

242b-7

$\theta_2$

249

242b

EP 2 053 721 A2

## FIG.35A

## FIG.35B

## FIG.36A

201

## FIG.36B

251

## FIG.36C

251

201

## FIG.37A

212

204

## FIG.37B

212

203

204

## FIG.37C

251

212

204

14(24)

FIG.38A

212

207

203b

203a

206

204

205

FIG.38B

205

9°

18°

9°

206

FIG.39

FIG.40

FIG.41

204

FIG.42

FIG.43

FIG.44A

213

FIG.44B          213

213

FIG.45

213

14(24)

FIG.46A

213

212

FIG.46B

213

212

14(24)

251

FIG.46C

213

212  212

251

FIG.47

212

201

# FIG.48A

212

251

14(24)

LEAKED MAGNETIC FLUX

# FIG.48B

WITHOUT SLITS

WITH SLITS

INDUCED VOLTAGE [V]

0    45    90    135    180    225    270    315    360

ROTATIONAL ANGLE (ELECTRICAL ANGLE) (°)

FIG.49

212

14(24)

251

FIG.50

FIG.51

## FIG.52

⊘ U COIL 1
⊗ V COIL 2
⊖ W COIL 3

FIG.53

FIG.54

FIG.55A

FIG.55B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007274579 A
- JP 2008114764 A